(19) Europäisches Patentamt / European Patent Office / Office européen des brevets

(11) **EP 3 972 368 B1**

(12) **EUROPEAN PATENT SPECIFICATION**

(45) Date of publication and mention of the grant of the patent:
**25.10.2023 Bulletin 2023/43**

(21) Application number: **21193183.7**

(22) Date of filing: **26.08.2021**

(51) International Patent Classification (IPC):
*H04W 72/04* (2023.01)    *H04W 72/23* (2023.01)
*H04L 5/00* (2006.01)    *H04W 72/12* (2023.01)
*H04W 74/08* (2009.01)

(52) Cooperative Patent Classification (CPC):
**H04L 5/0053; H04L 5/0044; H04L 5/0094; H04W 72/23;** H04L 5/0048; H04W 72/21; H04W 74/0833; H04W 76/14; H04W 76/19; H04W 76/27; H04W 76/28

(54) **METHOD AND APPARATUS FOR SMALL DATA TRANSMISSION (SDT) PROCEDURE IN A WIRELESS COMMUNICATION SYSTEM**

VERFAHREN UND VORRICHTUNG FÜR PROZESS DER ÜBERTRAGUNG KLEINER DATEN (SDT) IN EINEM DRAHTLOSKOMMUNIKATIONSSYSTEM

PROCÉDÉ ET APPAREIL POUR PROCÉDURE DE TRANSMISSION DE PETITES DONNÉES (SDT) DANS UN SYSTÈME DE COMMUNICATION SANS FIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.09.2020 US 202063079890 P**
**17.09.2020 US 202063079897 P**
**17.09.2020 US 202063079911 P**
**17.09.2020 US 202063079934 P**

(43) Date of publication of application:
**23.03.2022 Bulletin 2022/12**

(73) Proprietor: **ASUSTek Computer Inc.**
**Taipei City 112 (TW)**

(72) Inventors:
• **SHIH, Tun-Huai**
**Taipei City 112 (TW)**
• **GUO, Yu-Hsuan**
**Taipei City 112 (TW)**
• **OU, Meng-Hui**
**Taipei City 112 (TW)**

(74) Representative: **Hoefer & Partner Patentanwälte mbB**
**Pilgersheimer Straße 20**
**81543 München (DE)**

(56) References cited:
• "3rd Generation Partnership Project; Technical Specification Group Radio Access Network; NR; Radio Resource Control (RRC) protocol specification (Release 16)", 3GPP DRAFT; DRAFT_38331-G10_V3, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 21 July 2020 (2020-07-21), XP051909769, Retrieved from the Internet: URL:https://ftp.3gpp.org/tsg_ran/WG2_RL2/Specifications/202007_draft_specs_after_RAN_88/Draft_38331-g10_v3.docx [retrieved on 2020-07-21]
• ERICSSON (RAPPORTEUR): "CR for 38.331 on CA/DC Enhancements", 3GPP DRAFT; RP-201178, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Electronic; 20200601 - 20200612 25 June 2020 (2020-06-25), XP051906124, Retrieved from the Internet: URL:https://ftp.3gpp.org/3guInternal/3GPP_Ultimate_CRPacks/RP-201178.zip [retrieved on 2020-06-25]

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- SAMSUNG: "Random Access based Small Data Transmission - Signaling Flow", 3GPP DRAFT; R2-2006772, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Electronic; 20200817 - 20200828 6 August 2020 (2020-08-06), XP051911679, Retrieved from the Internet: URL:https://ftp.3gpp.org/tsg_ran/WG2_RL2/TSGR2_111-e/Docs/R2-2006772.zip [retrieved on 2020-08-06]

**Description**

This disclosure generally relates to wireless communication networks, and more particularly, to methods and apparatus for Small Data Transmission (SDT) procedure in a wireless communication system.

With the rapid rise in demand for communication of large amounts of data to and from mobile communication devices, traditional mobile voice communication networks are evolving into networks that communicate with Internet Protocol (IP) data packets. Such IP data packet communication can provide users of mobile communication devices with voice over IP, multimedia, multicast and on-demand communication services.

An exemplary network structure is an Evolved Universal Terrestrial Radio Access Network (E-UTRAN). The E-UTRAN system can provide high data throughput in order to realize the above-noted voice over IP and multimedia services. A new radio technology for the next generation (e.g., 5G) is currently being discussed by the 3GPP standards organization. Accordingly, changes to the current body of 3GPP standard are currently being submitted and considered to evolve and finalize the 3GPP standard.

3GPP TS 38.331 discloses RRC connection release as well as RRC connection resume procedures.

3GPP R2-2006350 discusses some changes for TS 38.331 on CA/DC Enhancements.

## SUMMARY

Methods and devices are disclosed from the perspective of a User Equipment (UE) and a network node and are defined in the independent claims. The invention is defined by the appended claims. Aspects or embodiments of the disclosure which do not fall under the scope of the claims are not included in the scope of the invention.

## BRIEF DESCRIPTION OF THE DRAWINGS

FIG. 1 shows a diagram of a wireless communication system.

FIG. 2 is a block diagram of a transmitter system (also known as access network) and a receiver system (also known as user equipment of UE).

FIG. 3 is a functional block diagram of a communication system.

FIG. 4 is a functional block diagram of the program code of Fig. 3.

FIG. 5 is a reproduction of Figure 9.2.2.4.1-1 of 3GPP TS 38.300 V16.2.0.

FIG. 6 is a reproduction of Figure 9.2.2.4.1-2 of 3GPP TS 38.300 V16.2.0.

FIG. 7 is a reproduction of Figure 9.2.2.4.1-3 of 3GPP TS 38.300 V16.2.0.

FIG. 8 is a reproduction of Figure 9.2.2.4.2-1 of 3GPP TS 38.300 V16.2.0.

FIG. 9 is a reproduction of Figure 4.2.1-1 of 3GPP TS 38.331 V16.1.0.

FIG. 10 is a reproduction of Figure 5.3.8.1-1 of 3GPP TS 38.331 V16.1.0.

FIG. 11 is a reproduction of Figure 5.3.13.1-1 of 3GPP TS 38.331 V16.1.0.

FIG. 12 is a reproduction of Figure 5.3.13.1-2 of 3GPP TS 38.331 V16.1.0.

FIG. 13 is a reproduction of Figure 5.3.13.1-3 of 3GPP TS 38.331 V16.1.0.

FIG. 14 is a reproduction of Figure 5.3.13.1-4 of 3GPP TS 38.331 V16.1.0.

FIG. 15 is a reproduction of Figure 5.3.13.1-5 of 3GPP TS 38.331 V16.1.0.

FIG. 16 illustrates a first example of SDT in RRC_INACTIVE state where the UE stays in RRC_INACTIVE state after performing SDT.

FIG. 17 illustrates a second example of SDT in RRC _INACTIVE state where the SDT procedure fallbacks to RRCResume.

FIG. 18 illustrates a third example of SDT in RRC_INACTIVE state where the SDT procedure fallbacks to RRCSetup.

FIG. 19 illustrates a first example where there is one subsequent UL transmission in SDT in RRC_INACTIVE state.

FIG. 20 illustrates a second example where there is one subsequent UL transmission in SDT in RRC_INACTIVE state.

FIG. 21 illustrates a first example where there is one subsequent DL transmission in SDT in RRC INACTIVE state.

FIG. 22 illustrates a second example that there is one subsequent DL transmission in SDT in RRC _INACTIVE state.

FIG. 23 is a diagram.

FIG. 24 is a diagram.

FIG. 25 is a flow chart.

FIG. 26 is a flow chart.

FIG. 27 is a flow chart.

## DETAILED DESCRIPTION

The exemplary wireless communication systems and devices described below employ a wireless communication system, supporting a broadcast service. Wireless communication systems are widely deployed to provide various types of communication such as voice, data, and so on. These systems may be based on code division multiple access (CDMA), time division multiple access (TDMA), orthogonal frequency division multiple access (OFDMA), 3GPP LTE (Long Term Evolution) wireless access, 3GPP LTE-A or LTE-Advanced (Long Term Evolution Advanced), 3GPP2 UMB (Ultra Mobile Broadband), WiMax, 3GPP NR (New Radio), or some other modulation techniques.

In particular, the exemplary wireless communication systems devices described below may be designed to support one or more standards such as the standard offered by a consortium named "3rd Generation Partnership Project" referred to herein as 3GPP, including: TS 38.300 V16.2.0, "NR, NR and NG-RAN overall description, Stage 2"; TS 38.321 V16.1.0, "NR, Medium Access Control (MAC) protocol specification"; TS 38.331 V16.1.0, "NR, Radio Resource Control (RRC) protocol specification"; RP-193252, "Work Item on NR small data transmissions in INACTIVE state", ZTE Corporation; 3GPP RAN2 #111 meeting minutes; and TS 38.213 V16.2.0, "NR, Physical layer procedures for control".

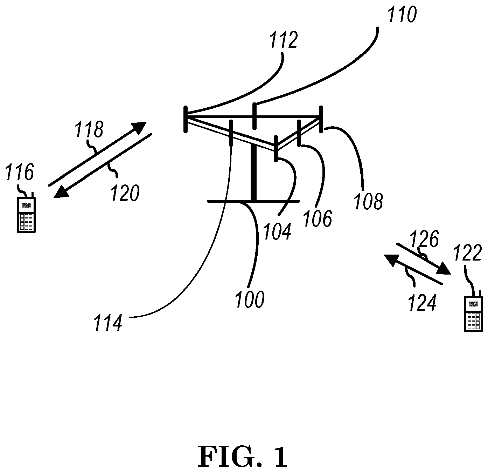

FIG. 1 shows a multiple access wireless communication system according to one embodiment of the invention. An access network 100 (AN) includes multiple antenna groups, one including 104 and 106, another including 108 and 110, and an additional including 112 and 114. In FIG. 1, only two antennas are shown for each antenna group, however, more or fewer antennas may be utilized for each antenna group. Access terminal 116 (AT) is in communication with antennas 112 and 114, where antennas 112 and 114 transmit information to access terminal 116 over forward link 120 and receive information from access terminal 116 over reverse link 118. Access terminal (AT) 122 is in communication with antennas 106 and 108, where antennas 106 and 108 transmit information to access terminal (AT) 122 over forward link 126 and receive information from access terminal (AT) 122 over reverse link 124. In a FDD system, communication links 118, 120, 124 and 126 may use different frequency for communication. For example, forward link 120 may use a different frequency then that used by reverse link 118.

Each group of antennas and/or the area in which they are designed to communicate is often referred to as a sector of the access network. In the embodiment, antenna groups each are designed to communicate to access terminals in a sector of the areas covered by access network 100.

In communication over forward links 120 and 126, the transmitting antennas of access network 100 may utilize beamforming in order to improve the signal-to-noise ratio of forward links for the different access terminals 116 and 122. Also, an access network using beamforming to transmit to access terminals scattered randomly through its coverage causes less interference to access terminals in neighboring cells than an access network transmitting through a single antenna to all its access terminals.

An access network (AN) may be a fixed station or base station used for communicating with the terminals and may also be referred to as an access point, a Node B, a base station, an enhanced base station, an evolved Node B (eNB), a network node, a network, or some other terminology. An access terminal (AT) may also be called user equipment (UE), a wireless communication device, terminal, access terminal or some other terminology.

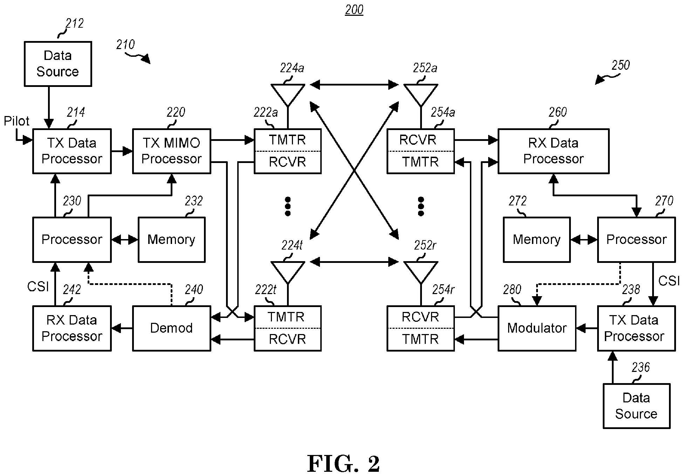

FIG. 2 is a simplified block diagram of an embodiment of a transmitter system 210 (also known as the access network) and a receiver system 250 (also known as access terminal (AT) or user equipment (UE)) in a MIMO system 200. At the transmitter system 210, traffic data for a number of data streams is provided from a data source 212 to a transmit (TX) data processor 214.

Preferably, each data stream is transmitted over a respective transmit antenna. TX data processor 214 formats, codes, and interleaves the traffic data for each data stream based on a particular coding scheme selected for that data stream to provide coded data.

The coded data for each data stream may be multiplexed with pilot data using OFDM techniques. The pilot data is typically a known data pattern that is processed in a known manner and may be used at the receiver system to estimate the channel response. The multiplexed pilot and coded data for each data stream is then modulated (i.e., symbol mapped) based on a particular modulation scheme (e.g., BPSK, QPSK, M-PSK, or M-QAM) selected for that data stream to provide modulation symbols. The data rate, coding, and modulation for each data stream may be determined by instructions performed by processor 230.

The modulation symbols for all data streams are then provided to a TX MIMO processor 220, which may further process the modulation symbols (e.g., for OFDM). TX MIMO processor 220 then provides $N_T$ modulation symbol streams to $N_T$ transmitters (TMTR) 222a through 222t. In certain embodiments, TX MIMO processor 220 applies beamforming weights to the symbols of the data streams and to the antenna from which the symbol is being transmitted.

Each transmitter 222 receives and processes a respective symbol stream to provide one or more analog signals, and further conditions (e.g., amplifies, filters, and upconverts) the analog signals to provide a modulated signal suitable for transmission over the MIMO channel. $N_T$ modulated signals from transmitters 222a through 222t are then transmitted from $N_T$ antennas 224a through 224t, respectively.

At receiver system 250, the transmitted modulated signals are received by $N_R$ antennas 252a through 252r and the received signal from each antenna 252 is provided to a respective receiver (RCVR) 254a through 254r. Each receiver 254 conditions (e.g., filters, amplifies, and downconverts) a respective received signal, digitizes the conditioned signal to provide samples, and further processes the samples to provide a corresponding "received" symbol stream.

An RX data processor 260 then receives and processes the $N_R$ received symbol streams from $N_R$ receivers 254 based on a particular receiver processing technique to provide $N_T$ "detected" symbol streams. The RX data processor 260 then demodulates, deinterleaves, and decodes each detected symbol stream to recover the traffic data for the data stream. The processing by RX data processor 260 is complementary to that performed by TX MIMO processor 220 and TX data processor 214 at transmitter system 210.

A processor 270 periodically determines which pre-coding matrix to use (discussed below). Processor 270 formulates a reverse link message comprising a matrix index portion and a rank value portion.

The reverse link message may comprise various types of information regarding the communication link and/or the received data stream. The reverse link message is then processed by a TX data processor 238, which also receives traffic data for a number of data streams from a data source 236, modulated by a modulator 280, conditioned by transmitters 254a through 254r, and transmitted back to transmitter system 210.

At transmitter system 210, the modulated signals from receiver system 250 are received by antennas 224, conditioned by receivers 222, demodulated by a demodulator 240, and processed by a RX data processor 242 to extract the reserve link message transmitted by the receiver system 250. Processor 230 then determines which pre-coding matrix to use for determining the beamforming weights then processes the extracted message.

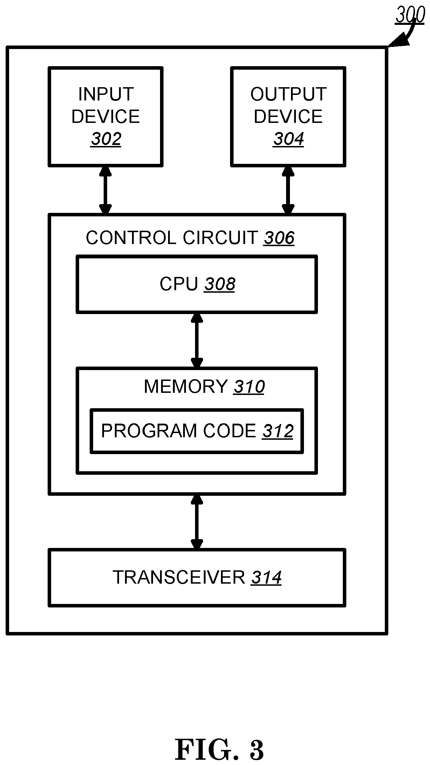

Turning to FIG. 3, this figure shows an alternative simplified functional block diagram of a communication device according to one embodiment of the invention. As shown in FIG. 3, the communication device 300 in a wireless communication system can be utilized for realizing the UEs (or ATs) 116 and 122 in FIG. 1 or the base station (or AN) 100 in FIG. 1, and the wireless communications system is preferably the NR system. The communication device 300 may include an input device 302, an output device 304, a control circuit 306, a central processing unit (CPU) 308, a memory 310, a program code 312, and a transceiver 314. The control circuit 306 executes the program code 312 in the memory 310 through the CPU 308, thereby controlling an operation of the communications device 300. The communications device 300 can receive signals input by a user through the input device 302, such as a keyboard or keypad, and can output images and sounds through the output device 304, such as a monitor or speakers. The transceiver 314 is used to receive and transmit wireless signals, delivering received signals to the control circuit 306, and outputting signals generated by the control circuit 306 wirelessly. The communication device 300 in a wireless communication system can also be utilized for realizing the AN 100 in FIG. 1.

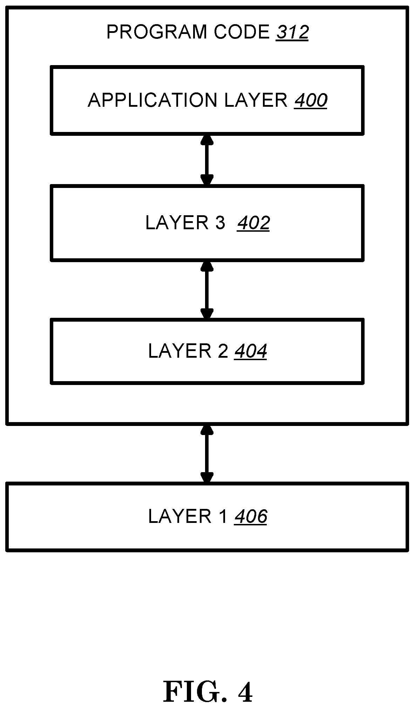

FIG. 4 is a simplified block diagram of the program code 312 shown in FIG. 3 in accordance with one embodiment of the invention. In this embodiment, the program code 312 includes an application layer 400, a Layer 3 portion 402, and a Layer 2 portion 404, and is coupled to a Layer 1 portion 406. The Layer 3 portion 402 generally performs radio resource control. The Layer 2 portion 404 generally performs link control. The Layer 1 portion 406 generally performs physical connections.

3GPP TS 38.300 and TS 38.331 provide the following description related to RRC INACTIVE state in New RAT/Radio (NR):

[*From 3GPP TS 38.300*]

**9.2 Intra-NR**

**9.2.2 Mobility in RRC_INACTIVE**

**9.2.2.1 Overview**

RRC_INACTIVE is a state where a UE remains in CM-CONNECTED and can move within an area configured by NG-RAN (the RNA) without notifying NG-RAN. In RRC_INACTIVE, the last serving gNB node keeps the UE context and the UE-associated NG connection with the serving AMF and UPF.

[...]

At transition to RRC_INACTIVE the NG-RAN node may configure the UE with a periodic RNA Update timer value. At periodic RNA Update timer expiry without notification from the UE, the gNB behaves as specified in TS 23.501 [3].

If the UE accesses a gNB other than the last serving gNB, the receiving gNB triggers the XnAP Retrieve UE Context procedure to get the UE context from the last serving gNB and may also trigger an Xn-U Address Indication procedure including tunnel information for potential recovery of data from the last serving gNB. Upon successful UE context retrieval, the receiving gNB shall perform the slice-aware admission control in case of receiving slice information and becomes the serving gNB and it further triggers the NGAP Path Switch Request and applicable RRC procedures. After the path switch procedure, the serving gNB triggers release of the UE context at the last serving gNB by means of the XnAP UE Context Release procedure.

In case the UE is not reachable at the last serving gNB, the gNB shall fail any AMF initiated UE-associated class 1 procedure which allows the signalling of unsuccessful operation in the respective response message. It may trigger the NAS Non Delivery Indication procedure to report the non-delivery of any NAS PDU received from the AMF.

If the UE accesses a gNB other than the last serving gNB and the receiving gNB does not find a valid UE Context, the receiving gNB can perform establishment of a new RRC connection instead of resumption of the previous RRC connection. UE context retrieval will also fail and hence a new RRC connection needs to be established if the serving AMF changes.

A UE in the RRC_INACTIVE state is required to initiate RNA update procedure when it moves out of the configured RNA. When receiving RNA update request from the UE, the receiving gNB triggers the XnAP Retrieve UE Context procedure to get the UE context from the last serving gNB and may decide to send the UE back to RRC_INACTIVE state, move the UE into RRC_CONNECTED state, or send the UE to RRC_IDLE. In case of periodic RNA update, if the last serving gNB decides not to relocate the UE context, it fails the Retrieve UE Context procedure and sends the UE back to RRC_INACTIVE, or to RRC_IDLE directly by an encapsulated *RRCRelease* message.

**9.2.2.2 Cell Reselection**

A UE in RRC_INACTIVE performs cell reselection. The principles of the procedure are as for the RRC_IDLE state (see clause 9.2.1.2).

**9.2.2.4 State Transitions**

**9.2.2.4.1 UE triggered transition from RRC_INACTIVE to RRC_CONNECTED**

The following figure describes the UE triggered transition from RRC_INACTIVE to RRC_CONNECTED in case of UE context retrieval success:

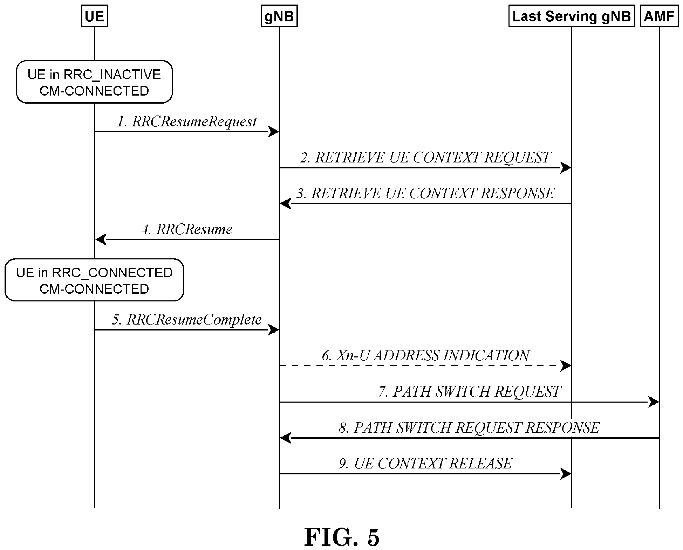

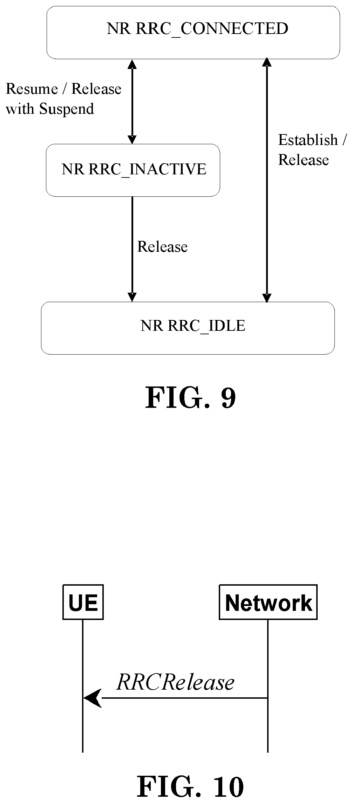

**[Figure 9.2.2.4.1-1 of** 3GPP TS 38.300 V16.2.0, entitled "UE triggered transition from RRC_INACTIVE to RRC_CONNECTED (UE context retrieval success)**", is reproduced as FIG. 5]**

1. The UE resumes from RRC_INACTIVE, providing the I-RNTI, allocated by the last serving gNB.
2. The gNB, if able to resolve the gNB identity contained in the I-RNTI, requests the last serving gNB to provide UE Context data.
3. The last serving gNB provides UE context data.

4/5. The gNB and UE completes the resumption of the RRC connection.

NOTE: User Data can also be sent in step 5 if the grant allows.

6. If loss of DL user data buffered in the last serving gNB shall be prevented, the gNB provides forwarding addresses.

7/8. The gNB performs path switch.

9. The gNB triggers the release of the UE resources at the last serving gNB.

After step 1 above, when the gNB decides to use a single RRC message to reject the Resume Request right away and keep the UE in RRC_INACTIVE without any reconfiguration (e.g. as described in the two examples below), or when the gNB decides to setup a new RRC connection, SRB0 (without security) is used. Conversely, when the gNB decides to reconfigure the UE (e.g. with a new DRX cycle or RNA) or when the gNB decides to push the UE to RRC_IDLE, SRB1 (with integrity protection and ciphering as previously configured for that SRB) shall be used.

NOTE: SRB1 can only be used once the UE Context is retrieved i.e. after step 3.

The following figure describes the UE triggered transition from RRC_INACTIVE to RRC_CONNECTED in case of UE context retrieval failure:

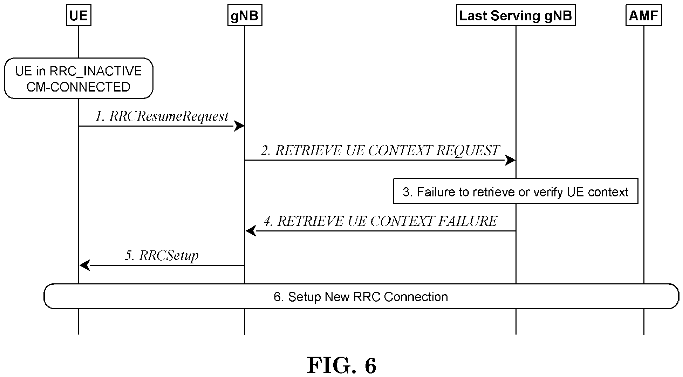

**[Figure 9.2.2.4.1-2 of** 3GPP TS 38.300 V16.2.0, entitled "UE triggered transition from RRC_INACTIVE to RRC_CONNECTED (UE context retrieval failure)**", is reproduced as FIG. 6]**

1. The UE resumes from RRC_INACTIVE, providing the I-RNTI, allocated by the last serving gNB.

2. The gNB, if able to resolve the gNB identity contained in the I-RNTI, requests the last serving gNB to provide UE Context data.

3. The last serving gNB cannot retrieve or verify the UE context data.

4. The last serving gNB indicates the failure to the gNB.

5. The gNB performs a fallback to establish a new RRC connection by sending *RRCSetup.*

6. A new connection is setup as described in clause 9.2.1.3.1.

The following figure describes the rejection form the network when the UE attempts to resume a connection from RRC_INACTIVE:

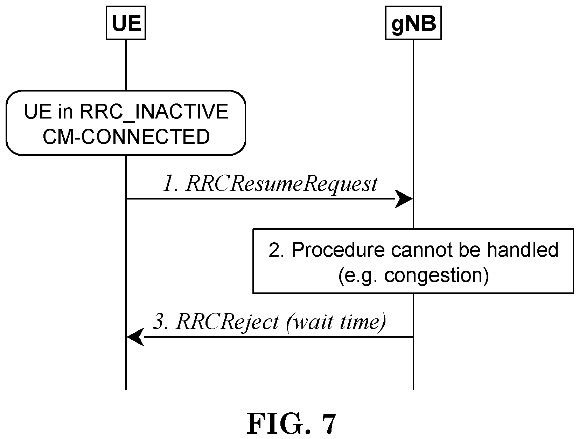

**[Figure 9.2.2.4.1-3 of** 3GPP TS 38.300 V16.2.0, entitled "Reject from the network, UE attempts to resume a connection**", is reproduced as FIG. 7]**

1. UE attempts to resume the connection from RRC_INACTIVE.

2. The gNB is not able to handle the procedure, for instance due to congestion.

3. The gNB sends *RRCReject* (with a wait time) to keep the UE in RRC_INACTIVE.

**9.2.2.4.2 Network triggered transition from RRC_INACTIVE to RRC_CONNECTED**

The following figure describes the network triggered transition from RRC_INACTIVE to RRC_CONNECTED:

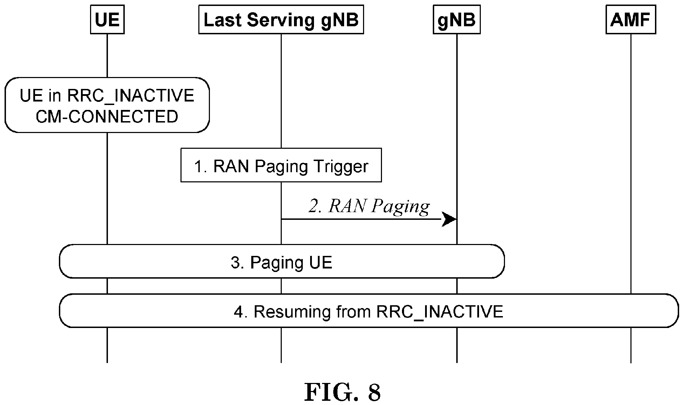

**[Figure 9.2.2.4.2-1 of** 3GPP TS 38.300 V16.2.0, entitled "Network triggered transition from RRC_INACTIVE to RRC_CONNECTED**", is reproduced as FIG. 8]**

1. A RAN paging trigger event occurs (incoming DL user plane, DL signalling from 5GC, etc.).

2. RAN paging is triggered; either only in the cells controlled by the last serving gNB or also by means of Xn RAN Paging in cells controlled by other gNBs, configured to the UE in the RAN-based Notification Area (RNA).

3. The UE is paged with the I-RNTI.

4. If the UE has been successfully reached, it attempts to resume from RRC_INACTIVE, as described in clause 9.2.2.4.1.

[...]

*[From 3GPP TS 38.331]*

**4.2 Architecture**

**4.2.1 UE states and state transitions including inter RAT**

A UE is either in RRC_CONNECTED state or in RRC_INACTIVE state when an RRC connection has been established. If this is not the case, i.e. no RRC connection is established, the UE is in RRC_IDLE state. The RRC states can further be characterised as follows:

- **RRC_IDLE:**

  - A UE specific DRX may be configured by upper layers;

  - UE controlled mobility based on network configuration;

  - The UE:

    - Monitors Short Messages transmitted with P-RNTI over DCI (see clause 6.5);

    - Monitors a Paging channel for CN paging using 5G-S-TMSI;

    - Performs neighbouring cell measurements and cell (re-)selection;

    - Acquires system information and can send SI request (if configured).

    - Performs logging of available measurements together with location and time for logged measurement configured UEs.

- **RRC_INACTIVE:**

  - A UE specific DRX may be configured by upper layers or by RRC layer;

  - UE controlled mobility based on network configuration;

  - The UE stores the UE Inactive AS context;

  - A RAN-based notification area is configured by RRC layer;

  The UE:

  - Monitors Short Messages transmitted with P-RNTI over DCI (see clause 6.5);

  - Monitors a Paging channel for CN paging using 5G-S-TMSI and RAN paging using fulll-RNTI;

  - Performs neighbouring cell measurements and cell (re-)selection;

  - Performs RAN-based notification area updates periodically and when moving outside the configured RAN-based notification area;

  - Acquires system information and can send SI request (if configured).

  - Performs logging of available measurements together with location and time for logged measurement configured UEs.

- **RRC_CONNECTED:**

  - The UE stores the AS context;

- Transfer of unicast data to/from UE;

- At lower layers, the UE may be configured with a UE specific DRX;

- For UEs supporting CA, use of one or more SCells, aggregated with the SpCell, for increased bandwidth;

- For UEs supporting DC, use of one SCG, aggregated with the MCG, for increased bandwidth;

- Network controlled mobility within NR and to/from E-UTRA;

- The UE:

  - Monitors Short Messages transmitted with P-RNTI over DCI (see clause 6.5), if configured;

  - Monitors control channels associated with the shared data channel to determine if data is scheduled for it;

  - Provides channel quality and feedback information;

  - Performs neighbouring cell measurements and measurement reporting;

  - Acquires system information;

  - Performs immediate MDT measurement together with available location reporting.

Figure 4.2.1-1 illustrates an overview of UE RRC state machine and state transitions in NR. A UE has only one RRC state in NR at one time.

**[Figure 4.2.1-1 of 3GPP TS 38.331 V16.1.0, entitled "UE state machine and state transitions in NR", is reproduced as FIG. 9]**

**5.3.8 RRC connection release**

**5.3.8.1 General**

**[Figure 5.3.8.1-1 of 3GPP TS 38.331 V16.1.0, entitled "RRC connection release, successful", is reproduced as FIG. 10]**

The purpose of this procedure is:

- to release the RRC connection, which includes the release of the established radio bearers as well as all radio resources; or

- to suspend the RRC connection only if SRB2 and at least one DRB or, for IAB, SRB2, are setup, which includes the suspension of the established radio bearers.

**5.3.8.2 Initiation**

The network initiates the RRC connection release procedure to transit a UE in RRC_CONNECTED to RRC_IDLE; or to transit a UE in RRC_CONNECTED to RRC_INACTIVE only if SRB2 and at least one DRB or, for IAB, SRB2, is setup in RRC_CONNECTED; or to transit a UE in RRC_INACTIVE back to RRC_INACTIVE when the UE tries to resume; or to transit a UE in RRC_INACTIVE to RRC_IDLE when the UE tries to resume. The procedure can also be used to release and redirect a UE to another frequency.

**5.3.8.3 Reception of the *RRCRelease* by the UE**

The UE shall:
[...]

1> if the *RRCRelease* includes *suspendConfig*:

  2> apply the received *suspendConfig*;

  2> remove all the entries within *VarConditionalReconfig*, if any;

  2> for each *measId*, if the associated *reportConfig* has a *reportType* set to *condTriggerConfig:*

    3> for the associated *reportConfigId*:
    4> remove the entry with the matching *reportConfigId* from the *reportConfigList* within the *VarMeasConfig*;

    3> if the associated *measObjectId* is only associated to a *reportConfig* with *reportType* set to *condTriggerConfig:*
    4> remove the entry with the matching *measObjectId* from the *measObjectList* within the *VarMeasConfig*;

    3> remove the entry with the matching *measId* from the *measIdList* within the *VarMeasConfig;*

  2> reset MAC and release the default MAC Cell Group configuration, if any;

  2> re-establish RLC entities for SRB1;

  2> if the *RRCRelease* message with *suspendConfig* was received in response to an *RRCResumeRequest* or an *RRCResumeRequest1*:

    3> stop the timer T319 if running;

    3> in the stored UE Inactive AS context:

      4> replace the $K_{gNB}$ and $K_{RRCint}$ keys with the current $K_{gNB}$ and $K_{RRCint}$ keys;

      4> replace the C-RNTI with the temporary C-RNTI in the cell the UE has received the *RRCRelease* message;

      4> replace the *cellIdentity* with the *cellIdentity* of the cell the UE has received the *RRCRelease* message;

      4> replace the physical cell identity with the physical cell identity of the cell the UE has received the *RRCRelease* message;

  2> else:
    3> store in the UE Inactive AS Context the current $K_{gNB}$ and $K_{RRCint}$ keys, the ROHC state, the stored QoS flow to DRB mapping rules, the C-RNTI used in the source PCell, the *cellIdentity* and the physical cell identity of the source PCell, the *spCellConfigCommon* within *ReconfigurationWithSync* of the PSCell (if configured) and all other parameters configured except for the ones within *ReconfigurationWithSync* of the PCell and *servingCellConfigCommonSIB;*
  NOTE 2: NR sidelink communication related configurations and logged measurement configuration are not stored as UE Inactive AS Context, when UE enters RRC_INACTIVE.

  2> suspend all SRB(s) and DRB(s), except SRB0;

  2> indicate PDCP suspend to lower layers of all DRBs;

  2> if the *t380* is included:
    3> start timer T380, with the timer value set to *t380*;

  2> if the *RRCRelease* message is including the *waitTime*:

    3> start timer T302 with the value set to the *waitTime*;

3> inform upper layers that access barring is applicable for all access categories except categories '0' and '2';

2> if T390 is running:

3> stop timer T390 for all access categories;

3> perform the actions as specified in 5.3.14.4;

2> indicate the suspension of the RRC connection to upper layers;

2> enter RRC_INACTIVE and perform cell selection as specified in TS 38.304 [20];

1> else
2> perform the actions upon going to RRC_IDLE as specified in 5.3.11, with the release cause 'other'.

5.3.13 RRC connection resume

5.3.13.1 General

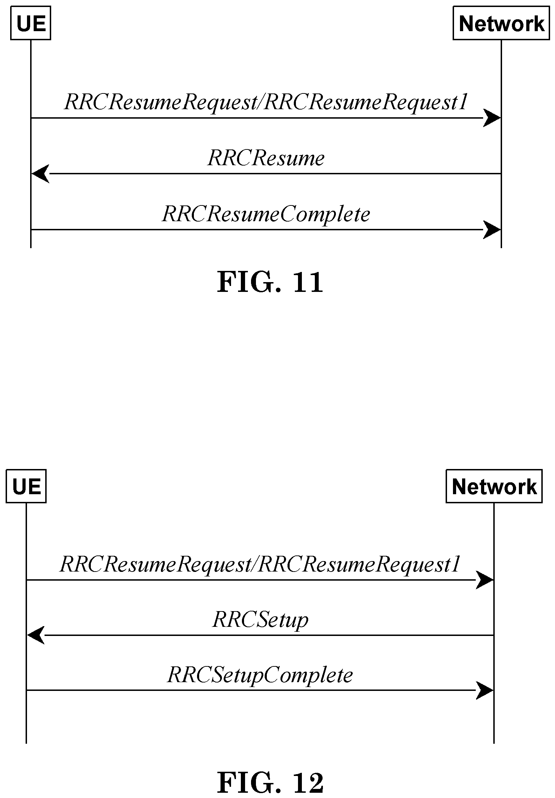

**[Figure 5.3.13.1-1 of 3GPP TS 38.331 V16.1.0, entitled "RRC connection resume, successful", is reproduced as FIG. 11]**

**[Figure 5.3.13.1-2 of 3GPP TS 38.331 V16.1.0, entitled "RRC connection resume fallback to RRC connection establishment, successful", is reproduced as FIG. 12]**

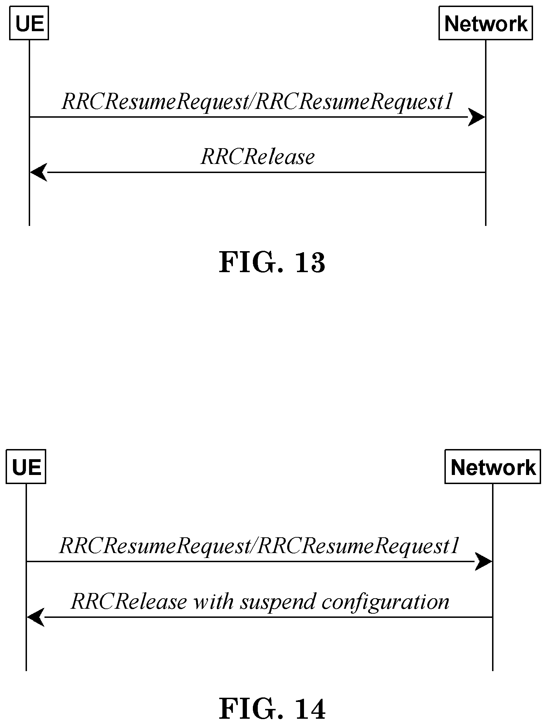

**[Figure 5.3.13.1-3 of 3GPP TS 38.331 V16.1.0, entitled "RRC connection resume followed by network release, successful", is reproduced as FIG. 13]**

**[Figure 5.3.13.1-4 of 3GPP TS 38.331 V16.1.0, entitled "RRC connection resume followed by network suspend, successful", is reproduced as FIG. 14]**

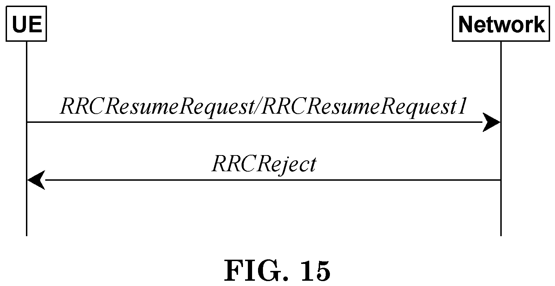

**[Figure 5.3.13.1-5 of 3GPP TS 38.331 V16.1.0, entitled "RRC connection resume, network reject", is reproduced as FIG. 15]**

The purpose of this procedure is to resume a suspended RRC connection, including resuming SRB(s) and DRB(s) or perform an RNA update.

**5.3.13.2 Initiation**

The UE initiates the procedure when upper layers or AS (when responding to RAN paging, upon triggering RNA updates while the UE is in RRC_INACTIVE, or for sidelink communication as specified in sub-clause 5.3.13.1a) requests the resume of a suspended RRC connection.
The UE shall ensure having valid and up to date essential system information as specified in clause 5.2.2.2 before initiating this procedure.
Upon initiation of the procedure, the UE shall:

1> if the resumption of the RRC connection is triggered by response to NG-RAN paging:

2> select '0' as the Access Category;

2> perform the unified access control procedure as specified in 5.3.14 using the selected Access Category and one or more Access Identities provided by upper layers;
3> if the access attempt is barred, the procedure ends;

1> else if the resumption of the RRC connection is triggered by upper layers:

2> if the upper layers provide an Access Category and one or more Access Identities:
3> perform the unified access control procedure as specified in 5.3.14 using the Access Category and Access Identities provided by upper layers;

4> if the access attempt is barred, the procedure ends;

2> set the *resumeCause* in accordance with the information received from upper layers; [...]

1> apply the default L1 parameter values as specified in corresponding physical layer specifications, except for the parameters for which values are provided in *SIB1*;

1> apply the default SRB1 configuration as specified in 9.2.1;

1> apply the default MAC Cell Group configuration as specified in 9.2.2;
[...]

1> apply the CCCH configuration as specified in 9.1.1.2;

1> apply the *timeAlignmentTimerCommon* included in *SIB1*;

1> start timer T319;

1> set the variable *pendingRNA-Update* to *false*;

1> initiate transmission of the *RRCResumeRequest* message or *RRCResumeRequest1* in accordance with 5.3.13.3.

### 5.3.13.3 Actions related to transmission of *RRCResumeRequest* or *RRCResumeRequest1* message

The UE shall set the contents of *RRCResumeRequest* or *RRCResumeRequest1* message as follows:

1> if field *useFullResumeID* is signalled in *SIB1*:

2> select *RRCResumeRequest1* as the message to use;

2> set the *resumeIdentity* to the stored *fullI-RNTI* value;

1> else:

2> select *RRCResumeRequest* as the message to use;

2> set the *resumeIdentity* to the stored *shortI-RNTI* value;

1> restore the RRC configuration, RoHC state, the stored QoS flow to DRB mapping rules and the $K_{gNB}$ and $K_{RRCint}$ keys from the stored UE Inactive AS context except for the following:

-   masterCellGroup;

-   mrdc-SecondaryCellGroup, if stored; and

-   pdcp-Config;

1> set the *resumeMAC-I* to the 16 least significant bits of the MAC-I calculated:

2> over the ASN.1 encoded as per clause 8 (i.e., a multiple of 8 bits) *VarResumeMAC-Input;*

2> with the $K_{RRCint}$ key in the UE Inactive AS Context and the previously configured integrity protection algorithm; and

2> with all input bits for COUNT, BEARER and DIRECTION set to binary ones;

1> derive the $K_{gNB}$ key based on the current $K_{gNB}$ key or the NH, using the stored *nextHopChainingCount* value, as specified in TS 33.501 [11];

1> derive the $K_{RRCenc}$ key, the $K_{RRCint}$ key, the $K_{UPint}$ key and the $K_{UPenc}$ key;

1> configure lower layers to apply integrity protection for all radio bearers except SRB0 using the configured algorithm and the $K_{RRCint}$ key and $K_{UPint}$ key derived in this subclause immediately, i.e., integrity protection shall be applied to all subsequent messages received and sent by the UE;
NOTE 1: Only DRBs with previously configured UP integrity protection shall resume integrity protection.

1> configure lower layers to apply ciphering for all radio bearers except SRB0 and to apply the configured ciphering algorithm, the $K_{RRCenc}$ key and the $K_{UPenc}$ key derived in this subclause, i.e. the ciphering configuration shall be applied to all subsequent messages received and sent by the UE;

1> re-establish PDCP entities for SRB1;

1> resume SRB1;

1> submit the selected message *RRCResumeRequest* or *RRCResumeRequest1* for transmission to lower layers.
NOTE 2: Only DRBs with previously configured UP ciphering shall resume ciphering.

If lower layers indicate an integrity check failure while T319 is running, perform actions specified in 5.3.13.5.
The UE shall continue cell re-selection related measurements as well as cell re-selection evaluation. If the conditions for cell re-selection are fulfilled, the UE shall perform cell re-selection as specified in 5.3.13.6.

### 5.3.13.4 Reception of the *RRCResume* by the UE

The UE shall:

1> stop timer T319;
1> stop timer T380, if running;
1> if T331 is running:

    2> stop timer T331;
    2> perform the actions as specified in 5.7.8.3;

1> if the *RRCResume* includes the *fullConfig*:
2> perform the full configuration procedure as specified in 5.3.5.11;
1> else:

    2> if the *RRCResume* does not include the *restoreMCG-SCells*:
    3> release the MCG SCell(s) from the UE Inactive AS context, if stored;
    2> if the *RRCResume* does not include the *restoreSCG*:
    3> release the MR-DC related configurations (i.e., as specified in 5.3.5.10) from the UE Inactive AS context, if stored;
    2> restore the *masterCellGroup, mrdc-SecondaryCellGroup,* if stored, and *pdcp-Config* from the UE Inactive AS context;
    2> configure lower layers to consider the restored MCG and SCG SCell(s) (if any) to be in deactivated state;

1> discard the UE Inactive AS context;
1> release the *suspendConfig* except the *ran-NotificationAreaInfo;*
1> if the *RRCResume* includes the *masterCellGroup:*
2> perform the cell group configuration for the received *masterCellGroup* according to 5.3.5.5;
1> if the *RRCResume* includes the *mrdc-SecondaryCellGroup:*

    2> if the received *mrdc-SecondaryCellGroup* is set to *nr-SCG:*
    3> perform the RRC reconfiguration according to 5.3.5.3 for the *RRCReconfiguration* message included in *nr-SCG;*
    2> if the received *mrdc-SecondaryCellGroup* is set to *eutra-SCG:*

3> perform the RRC connection reconfiguration as specified in TS 36.331 [10], clause 5.3.5.3 for the *RRCConnectionReconfiguration* message included in *eutra-SCG*;

1> if the *RRCResume* includes the *radioBearerConfig*:
2> perform the radio bearer configuration according to 5.3.5.6;
1> if the *RRCResume* message includes the *sk-Counter*:
2> perform security key update procedure as specified in 5.3.5.7;
1> if the *RRCResume* message includes the *radioBearerConfig2*:
2> perform the radio bearer configuration according to 5.3.5.6;
1> if the *RRCResume* message includes the *needForGapsConfigNR*:

2> if *needForGapsConfigNR* is set to *setup*:
3> consider itself to be configured to provide the measurement gap requirement information of NR target bands;
2> else:
3> consider itself not to be configured to provide the measurement gap requirement information of NR target bands;

1> resume SRB2, SRB3 (if configured), and all DRBs;
1> if stored, discard the cell reselection priority information provided by the *cellReselectionPriorities* or inherited from another RAT;
1> stop timer T320, if running;
1> if the *RRCResume* message includes the *measConfig*:
2> perform the measurement configuration procedure as specified in 5.5.2;
1> resume measurements if suspended;
1> if T390 is running:

2> stop timer T390 for all access categories;
2> perform the actions as specified in 5.3.14.4;

1> if T302 is running:

2> stop timer T302;
2> perform the actions as specified in 5.3.14.4;

1> enter RRC_CONNECTED;
1> indicate to upper layers that the suspended RRC connection has been resumed;
1> stop the cell re-selection procedure;
1> consider the current cell to be the PCell;
1> set the content of the of *RRCResumeComplete* message as follows:
[...]
1> submit the *RRCResumeComplete* message to lower layers for transmission;
1> the procedure ends.

### 5.3.13.9 Reception of the *RRCRelease* by the UE

The UE shall:
1> perform the actions as specified in 5.3.8.
3GPP TS 38.331 provides the following description related to Radio Resource Control (RRC) parameters and configurations in NR:

-  *MIB*

The *MIB* includes the system information transmitted on BCH.
Signalling radio bearer: N/A
RLC-SAP: TM
Logical channel: BCCH
Direction: Network to UE

## *MIB*

```
MIB ::=                          SEQUENCE {
    systemFrameNumber            BIT STRING (SIZE (6)),
    subCarrierSpacingCommon      ENUMERATED {scs15or60, scs30or120},
    ssb-SubcarrierOffset         INTEGER (0..15),
    dmrs-TypeA-Position          ENUMERATED {pos2, pos3},
    pdcch-ConfigSIB1             PDCCH-ConfigSIB1,
    cellBarred                   ENUMERATED {barred, notBarred},
    intraFreqReselection         ENUMERATED {allowed, notAllowed},
    spare                        BIT STRING (SIZE (1))
}
```

| *MIB* field descriptions |
|---|
| ***pdcch-ConfigSIB1*** <br> Determines a common *ControlResourceSet* (CORESET), a common search space and necessary PDCCH parameters. If the field *ssb-SubcarrierOffset* indicates that *SIB1* is absent, the field *pdcch-ConfigSIB1* indicates the frequency positions where the UE may find SS/PBCH block with *SIB1* or the frequency range where the network does not provide SS/PBCH block with *SIB1* (see TS 38.213 [13], clause 13). |

- *PDCCH-ConfigSIB1*

The IE *PDCCH-ConfigSIB1* is used to configure CORESET#0 and search space#0.

## *PDCCH-ConfigSIB1* information element

```
PDCCH-ConfigSIB1 ::=             SEQUENCE {
    controlResourceSetZero       ControlResourceSetZero,
    searchSpaceZero              SearchSpaceZero
}
```

| *PDCCH-ConfigSIB1* field descriptions |
|---|
| ***controlResourceSetZero*** <br> Determines a common ControlResourceSet (CORESET) with ID #0, see TS 38.213 [13], clause 13. |
| ***searchSpaceZero*** <br> Determines a common search space with ID #0, see TS 38.213 [13], clause 13. |

- *SIB1*

*SIB1* contains information relevant when evaluating if a UE is allowed to access a cell and defines the scheduling of other system information. It also contains radio resource configuration information that is common for all UEs and barring information applied to the unified access control.

Signalling radio bearer: N/A
RLC-SAP: TM
Logical channels: BCCH
Direction: Network to UE

## SIB1 message

```
SIB1 ::=            SEQUENCE {
    …
    servingCellConfigCommon          ServingCellConfigCommonSIB          OPTIONAL,    -- Need
R
    …
```

- *ServingCellConfigCommonSIB*

The IE *ServingCellConfigCommonSIB* is used to configure cell specific parameters of a UE's serving cell in SIB1.

## *ServingCellConfigCommonSIB* information element

```
ServingCellConfigCommonSIB ::=       SEQUENCE {
    downlinkConfigCommon              DownlinkConfigCommonSIB,
    uplinkConfigCommon                UplinkConfigCommonSIB                OPTIONAL, -- Need
R
    supplementaryUplink               UplinkConfigCommonSIB                OPTIONAL, -- Need
R
    …
```

- *DownlinkConfigCommonSIB*

The IE *DownlinkConfigCommonSIB* provides common downlink parameters of a cell.

## *DownlinkConfigCommonSIB* information element

```
DownlinkConfigCommonSIB ::=     SEQUENCE {
    frequencyInfoDL                 FrequencyInfoDL-SIB,
    initialDownlinkBWP              BWP-DownlinkCommon,
    bcch-Config                     BCCH-Config,
    pcch-Config                     PCCH-Config,
    ...
}
```

---

*DownlinkConfigCommonSIB* field descriptions *initialDownlinkBWP*

The initial downlink BWP configuration for a PCell. The network configures the *locationAndBandwidth* so that the initial downlink BWP contains the entire CORESET#0 of this serving cell in the frequency domain. The UE applies the *locaitionAndBandwidith* upon reception of this field (e.g. to determine the frequency position of signals described in relation to this *locationAndBandwidth*) but it keeps CORESET#0 until after reception of *RRCSetup/RRCResume/RRCReestablishment.*

---

- *BWP-DownlinkCommon*

The IE *BWP-DownlinkCommon* is used to configure the common parameters of a downlink BWP. They are "cell specific" and the network ensures the necessary alignment with corresponding parameters of other UEs. The common parameters of the initial bandwidth part of the PCell are also provided via system information. For all other serving cells, the network provides the common parameters via dedicated signalling.

### *BWP-DownlinkCommon* information element

```
BWP-DownlinkCommon ::=              SEQUENCE {
    genericParameters               BWP,
    pdcch-ConfigCommon              SetupRelease { PDCCH-ConfigCommon }   OPTIONAL,   --
Need M
    pdsch-ConfigCommon              SetupRelease { PDSCH-ConfigCommon }   OPTIONAL,   --
Need M
    ...
}
```

- PDCCH-ConfigCommon

The IE *PDCCH-ConfigCommon* is used to configure cell specific PDCCH parameters provided in SIB as well as in dedicated signalling.

### *PDCCH-ConfigCommon* information element

```
PDCCH-ConfigCommon ::=             SEQUENCE {
    controlResourceSetZero          ControlResourceSetZero    OPTIONAL,   -- Cond InitialBWP-
Only

    commonControlResourceSet        ControlResourceSet        OPTIONAL,   -- Need R
    searchSpaceZero                 SearchSpaceZero           OPTIONAL,   -- Cond InitialBWP-
Only
    commonSearchSpaceList           SEQUENCE (SIZE(1..4)) OF SearchSpace    OPTIONAL,   --
Need R
    searchSpaceSIB1                 SearchSpaceId             OPTIONAL,   -- Need S
    searchSpaceOtherSystemInformation  SearchSpaceId          OPTIONAL,   -- Need S
    pagingSearchSpace               SearchSpaceId             OPTIONAL,   -- Need S
    ra-SearchSpace                  SearchSpaceId             OPTIONAL,   -- Need S
    ...,
```

| *PDCCH-ConfigCommon* field descriptions |
| --- |
| **commonControlResourceSet**<br>An additional common control resource set which may be configured and used for any common or UE-specific search space. If the network configures this field, it uses a *ControlResourceSetId* other than 0 for this *ControlResourceSet.* The network configures the *commonControlResourceSet* in *SIB1* so that it is contained in the bandwidth of CORESET#0. |
| **commonSearchSpaceList, commonSearchSpaceListExt**<br>A list of additional common search spaces. If the network configures this field, it uses the *SearchSpaceIds* other than 0. If the field is included, it replaces any previous list, i.e. all the entries of the list are replaced and each of the *SearchSpace* entries is considered to be newly created and the conditions and Need codes for setup of the entry apply. If the network includes *commonSearchSpaceListExt,* it includes the same number of entries, and listed in the same order, as in *commonSearchSpaceList.* |
| **controlResourceSetZero** |

(continued)

| PDCCH-ConfigCommon field descriptions |
|---|
| Parameters of the common CORESET#0 which can be used in any common or UE-specific search spaces. The values are interpreted like the corresponding bits in *MIB pdcch-ConfigSIB1*. Even though this field is only configured in the initial BWP (BWP#0) *controlResourceSetZero* can be used in search spaces configured in other DL BWP (s) than the initial DL BWP if the conditions defined in TS 38.213 [13], clause 10 are satisfied. |
| *pagingSearchSpace*<br>ID of the Search space for paging (see TS 38.213 [13], clause 10.1). If the field is absent, the UE does not receive paging in this BWP (see TS 38.213 [13], clause 10). |
| *ra-SearchSpace*<br>ID of the Search space for random access procedure (see TS 38.213 [13], clause 10.1). If the field is absent, the UE does not receive RAR in this BWP. This field is mandatory present in the DL BWP(s) if the conditions described in TS 38.321 [3], subclause 5.15 are met. |
| *searchSpaceOtherSystemInformation*<br>ID of the Search space for other system information, i.e., *SIB2* and beyond (see TS 38.213 [13], clause 10.1) If the field is absent, the UE does not receive other system information in this BWP. |
| *searchSpaceSIB1*<br>ID of the search space for *SIB1* message. In the initial DL BWP of the UE's PCell, the network sets this field to 0. If the field is absent, the UE does not receive *SIB1* in this BWP. (see TS 38.213 [13], clause 10) |
| *searchSpaceZero*<br>Parameters of the common SearchSpace#0. The values are interpreted like the corresponding bits in *MIB pdcch-ConfigSIB1.* Even though this field is only configured in the initial BWP (BWP#0), *searchSpaceZero* can be used in search spaces configured in other DL BWP(s) than the initial DL BWP if the conditions described in TS 38.213 [13], clause 10, are satisfied. |

- PDSCH-ConfigCommon

The IE *PDSCH-ConfigCommon* is used to configure cell specific PDSCH parameters.

- UplinkConfigCommonSIB

The IE *UplinkConfigCommonSIB* provides common uplink parameters of a cell.

### *UplinkConfigCommonSIB* information element

```
UplinkConfigCommonSIB ::=              SEQUENCE {
    frequencyInfoUL                    FrequencyInfoUL-SIB,
    initialUplinkBWP                   BWP-UplinkCommon,


    timeAlignmentTimerCommon           TimeAlignmentTimer
}
```

| UplinkConfigCommonSIB field descriptions |
|---|
| *frequencyInfoUL*<br>Absolute uplink frequency configuration and subcarrier specific virtual carriers. |
| *InitialUplinkBWP*<br>The initial uplink BWP configuration for a PCell (see TS 38.213 [13], clause 12). |

*- BWP-UplinkCommon*

The IE *BWP-UplinkCommon* is used to configure the common parameters of an uplink BWP. They are "cell specific" and the network ensures the necessary alignment with corresponding parameters of other UEs. The common parameters of the initial bandwidth part of the PCell are also provided via system information. For all other serving cells, the network provides the common parameters via dedicated signalling.

## *BWP-UplinkCommon* information element

```
BWP-UplinkCommon ::=                    SEQUENCE {
    genericParameters                   BWP,
    rach-ConfigCommon                   SetupRelease { RACH-ConfigCommon }    OPTIONAL,    --
Need M
    pusch-ConfigCommon                  SetupRelease { PUSCH-ConfigCommon }   OPTIONAL,    --
Need M
    pucch-ConfigCommon                  SetupRelease { PUCCH-ConfigCommon }   OPTIONAL,    --
Need M
    ...,
    [[
    rach-ConfigCommonIAB-r16            SetupRelease { RACH-ConfigCommon }    OPTIONAL,    --
Need M
    useInterlacePUCCH-PUSCH-r16         ENUMERATED {enabled}                  OPTIONAL,    --
Need R
    msgA-ConfigCommon-r16               SetupRelease { MsgA-ConfigCommon-r16 } OPTIONAL    --
Cond SpCellOnly2
    ]]
}
```

| *BWP-UplinkCommon* field descriptions |
|---|
| *pucch-ConfigCommon*<br>Cell specific parameters for the PUCCH of this BWP. |
| *pusch-ConfigCommon*<br>Cell specific parameters for the PUSCH of this BWP. |

*- PUSCH-ConfigCommon*

The IE *PUSCH-ConfigCommon* is used to configure the cell specific PUSCH parameters.

*- BWP-DownlinkDedicated*

The IE *BWP-DownlinkDedicated* is used to configure the dedicated (UE specific) parameters of a downlink BWP.

## *BWP-DownlinkDedicated* information element

```
BWP-DownlinkDedicated ::=            SEQUENCE {
    pdcch-Config                     SetupRelease { PDCCH-Config }        OPTIONAL,     --
Need M
    pdsch-Config                     SetupRelease { PDSCH-Config }        OPTIONAL,     --
Need M
    sps-Config                       SetupRelease { SPS-Config }          OPTIONAL,     --
Need M
    ...
```

*- PDCCH-Config*

The IE *PDCCH-Config* is used to configure UE specific PDCCH parameters such as control resource sets (CORESET), search spaces and additional parameters for acquiring the PDCCH. If this IE is used for the scheduled cell in case of cross carrier scheduling, the fields other than *searchSpacesToAddModList* and *searchSpacesToReleaseList* are absent. If the IE is used for a dormant BWP, the fields other than *controlResourceSetToAddModList* and *controlResourceSetToReleaseList* are absent.

## *PDCCH-Config* information element

```
PDCCH-Config ::=                 SEQUENCE {
    controlResourceSetToAddModList       SEQUENCE(SIZE (1..3)) OF ControlResourceSet
OPTIONAL,    -- Need N
    controlResourceSetToReleaseList      SEQUENCE(SIZE (1..3)) OF ControlResourceSetId
OPTIONAL,    -- Need N
    searchSpacesToAddModList             SEQUENCE(SIZE (1..10)) OF SearchSpace
OPTIONAL,    -- Need N
    searchSpacesToReleaseList            SEQUENCE(SIZE (1..10)) OF SearchSpaceId
OPTIONAL,    -- Need N
    ...
```

| *PDCCH-Config* field descriptions |
|---|
| *controlResourceSetToAddModList, controlResourceSetToAddModList2* |
| List of UE specifically configured Control Resource Sets (CORESETs) to be used by the UE. The network configures at most 3 CORESETs per BWP per cell (including UE-specific and common CORESETs). The UE shall consider entries in *controlResourceSetToAddModList* and in *controlResourceSetToAddModList2* as a single list, i.e. an entry created using *controlResourceSetToAddModList* can be modifed using *controlResourceSetToAddModList2* and vice-versa. In case network reconfigures control resource set with the same *ControlResourceSetId* as used for *commonControlResourceSet* configured via *PDCCH-ConfigCommon,* the configuration from *PDCCH-Config* always takes precedence and should not be updated by the UE based on *servingCellConfigCommon.* |
| *controlResourceSetToReleaseList* |
| List of UE specifically configured Control Resource Sets (CORESETs) to be released by the UE. This field only applies to CORESETs configured by *controlResourceSetToAddModList* and does not release the field *commonControlResourceSet* configured by *PDCCH-ConfigCommon.* |
| *searchSpacesToAddModList, searchSpacesToAddModListExt* |

(continued)

| **PDCCH-Config** field descriptions |
| --- |
| List of UE specifically configured Search Spaces. The network configures at most 10 Search Spaces per BWP per cell (including UE-specific and common Search Spaces). If the network includes searchSpaceToAddModListExt, it includes the same number of entries, and listed in the same order, as in searchSpacesToAddModList. |

*- PDSCH-Config*

The *PDSCH-Config* IE is used to configure the UE specific PDSCH parameters.

*- BWP-UplinkDedicated*

The IE *BWP-UplinkDedicated* is used to configure the dedicated (UE specific) parameters of an uplink BWP.

## *BWP-UplinkDedicated* information element

```
BWP-UplinkDedicated ::=              SEQUENCE {
    pucch-Config                     SetupRelease { PUCCH-Config }           OPTIONAL,     --
Need M
    pusch-Config                     SetupRelease { PUSCH-Config }           OPTIONAL,     --
Need M
    configuredGrantConfig            SetupRelease { ConfiguredGrantConfig }  OPTIONAL,     --
Need M
    srs-Config                       SetupRelease { SRS-Config }             OPTIONAL,     --
Need M
    beamFailureRecoveryConfig        SetupRelease { BeamFailureRecoveryConfig }
OPTIONAL,     -- Cond SpCellOnly
    ...,
```

*- PUSCH-Config*

The IE *PUSCH-Config* is used to configure the UE specific PUSCH parameters applicable to a particular BWP.

*- ControlResourceSet*

The IE *ControlResourceSet* is used to configure a time/frequency control resource set (CORESET) in which to search for downlink control information (see TS 38.213 [13], clause 10.1).

**ControlResourceSet information element**

```
ControlResourceSet ::=                    SEQUENCE {
    controlResourceSetId                  ControlResourceSetId,

    frequencyDomainResources              BIT STRING (SIZE (45)),
    duration                              INTEGER (1..maxCoReSetDuration),
    cce-REG-MappingType                   CHOICE {
        interleaved                           SEQUENCE {
            reg-BundleSize                        ENUMERATED {n2, n3, n6},
            interleaverSize                       ENUMERATED {n2, n3, n6},
            shiftIndex                            INTEGER(0..maxNrofPhysicalResourceBlocks-1)
OPTIONAL -- Need S
        },
        nonInterleaved                        NULL
    },
    precoderGranularity                   ENUMERATED {sameAsREG-bundle, allContiguousRBs},
    tci-StatesPDCCH-ToAddList             SEQUENCE(SIZE (1..maxNrofTCI-StatesPDCCH)) OF TCI-StateId
OPTIONAL, -- Cond NotSIB1-initialBWP
    tci-StatesPDCCH-ToReleaseList         SEQUENCE(SIZE (1..maxNrofTCI-StatesPDCCH)) OF TCI-StateId
OPTIONAL, -- Cond NotSIB1-initialBWP
    tci-PresentInDCI                      ENUMERATED {enabled}
OPTIONAL, -- Need S
    pdcch-DMRS-ScramblingID               INTEGER (0..65535)
OPTIONAL, -- Need S
    ...,
```

| *ControlResourceSet* field descriptions |
|---|
| *controlResourceSetId* <br> Identifies the instance of the *ControlResourceSet* IE. Value 0 identifies the common CORESET configured in *MIB* and in *ServingCellConfigCommon* (*controlResourceSetZero*) and is hence not used here in the *ControlResourceSet* IE. Other values identify CORESETs configured by dedicated signalling or in *SIB1*. The *controlResourceSetId* is unique among the BWPs of a serving cell. <br> If the field *controlResourceSetId-v1610* is present, the UE shall ignore the *controlResourceSetId* field (without suffix). |
| *duration* <br> Contiguous time duration of the CORESET in number of symbols (see TS 38.211 [16], clause 7.3.2.2). |
| *frequencyDomainResources* <br> Frequency domain resources for the CORESET. Each bit corresponds a group of 6 RBs, with grouping starting from the first RB group (see TS 38.213 [13], clause 10.1) in the BWP. The first (left-most / most significant) bit corresponds to the first RB group in the BWP, and so on. A bit that is set to 1 indicates that this RB group belongs to the frequency domain resource of this CORESET. Bits corresponding to a group of RBs not fully contained in the bandwidth part within which the CORESET is configured are set to zero (see TS 38.211 [16], clause 7.3.2.2). |
| *interleaverSize* <br> Interleaver-size (see TS 38.211 [16], clause 7.3.2.2). |
| *pdcch-DMRS-ScramblingID* <br> PDCCH DMRS scrambling initialization (see TS 38.211 [16], clause 7.4.1.3.1). When the field is absent the UE applies the value of the *physCellId* configured for this serving cell. |
| *precoderGranularity* |

(continued)

| ***ControlResourceSet* field descriptions** |
| --- |
| Precoder granularity in frequency domain (see TS 38.211 [16], clauses 7.3.2.2 and 7.4.1.3.2). |
| ***reg-BundleSize***<br>Resource Element Groups (REGs) can be bundled to create REG bundles. This parameter defines the size of such bundles (see TS 38.211 [16], clause 7.3.2.2). |
| ***shiftIndex***<br>When the field is absent the UE applies the value of the *physCellId* configured for this serving cell (see TS 38.211 [16], clause 7.3.2.2). |
| ***tci-PresentInDCI***<br>This field indicates if TCI field is present or absent in DCI format 1_1. When the field is absent the UE considers the TCI to be absent/disabled. In case of cross carrier scheduling, the network sets this field to enabled for the *ControlResourceSet* used for cross carrier scheduling in the scheduling cell (see TS 38.214 [19], clause 5.1.5). |
| ***tci-StatesPDCCH-ToAddList***<br>A subset of the TCI states defined in pdsch-Config included in the *BWP-DownlinkDedicated* corresponding to the serving cell and to the DL BWP to which the *ControlResourceSet* belong to. They are used for providing QCL relationships between the DL RS(s) in one RS Set (TCI-State) and the PDCCH DMRS ports (see TS 38.213 [13], clause 6.). The network configures at most *maxNrofTCI-StatesPDCCH* entries. |

- ServingCellConfig

The IE *ServingCellConfig* is used to configure (add or modify) the UE with a serving cell, which may be the SpCell or an SCell of an MCG or SCG. The parameters herein are mostly UE specific but partly also cell specific (e.g. in additionally configured bandwidth parts). Reconfiguration between a PUCCH and PUCCHless SCell is only supported using an SCell release and add.

## *ServingCellConfig* information element

```
ServingCellConfig ::=                  SEQUENCE {
    tdd-UL-DL-ConfigurationDedicated   TDD-UL-DL-ConfigDedicated        OPTIONAL,   -- Cond
TDD
    initialDownlinkBWP                 BWP-DownlinkDedicated            OPTIONAL,   -- Need
M
    downlinkBWP-ToReleaseList          SEQUENCE (SIZE (1..maxNrofBWPs)) OF BWP-Id
OPTIONAL,   -- Need N
    downlinkBWP-ToAddModList           SEQUENCE (SIZE (1..maxNrofBWPs)) OF BWP-Downlink
OPTIONAL,   -- Need N
    firstActiveDownlinkBWP-Id          BWP-Id                   OPTIONAL,   -- Cond
SyncAndCellAdd
    bwp-InactivityTimer                ENUMERATED {ms2, ms3, ms4, ms5, ms6, ms8, ms10, ms20,
ms30,
                                       ms40,ms50, ms60, ms80,ms100, ms200,ms300,
ms500,
                                       ms750, ms1280, ms1920, ms2560, spare10,
                                       spare9, spare8, spare7, spare6, spare5,
                                       spare4, spare3, spare2, spare1 }
                                       OPTIONAL,   --Need R
    defaultDownlinkBWP-Id              BWP-Id                                 OPTIONAL,   -- Need
S
    uplinkConfig                       UplinkConfig                           OPTIONAL,   -- Need
M
    supplementaryUplink                UplinkConfig                           OPTIONAL,   -- Need
M
```

```
    pdcch-ServingCellConfig          SetupRelease { PDCCH-ServingCellConfig }
OPTIONAL,     -- Need M
    pdsch-ServingCellConfig          SetupRelease { PDSCH-ServingCellConfig }
OPTIONAL,     -- Need M
    csi-MeasConfig                   SetupRelease { CSI-MeasConfig }     OPTIONAL,     -- Need
M
    ...
}
UplinkConfig ::=                 SEQUENCE {
    initialUplinkBWP                 BWP-UplinkDedicated                    OPTIONAL,    --
Need M
    uplinkBWP-ToReleaseList          SEQUENCE (SIZE (1..maxNrofBWPs)) OF BWP-Id
OPTIONAL,     -- Need N
    uplinkBWP-ToAddModList           SEQUENCE (SIZE (1..maxNrofBWPs)) OF BWP-Uplink
OPTIONAL,     -- Need N
    firstActiveUplinkBWP-Id          BWP-Id                        OPTIONAL,     -- Cond
SyncAndCellAdd
    pusch-ServingCellConfig          SetupRelease { PUSCH-ServingCellConfig }
OPTIONAL,     -- Need M
    carrierSwitching                 SetupRelease { SRS-CarrierSwitching }   OPTIONAL,     --
Need M
    ...,
```

- CSI-MeasConfig

The IE *CSI-MeasConfig* is used to configure CSI-RS (reference signals) belonging to the serving cell in which *CSI-MeasConfig* is included, channel state information reports to be transmitted on PUCCH on the serving cell in which *CSI-MeasConfig* is included and channel state information reports on PUSCH triggered by DCI received on the serving cell in which *CSI-MeasConfig* is included. See also TS 38.214 [19], clause 5.2.

- CSI-ReportConfig

The IE *CSI-ReportConfig* is used to configure a periodic or semi-persistent report sent on PUCCH on the cell in which the *CSI-ReportConfig* is included, or to configure a semi-persistent or aperiodic report sent on PUSCH triggered by DCI received on the cell in which the *CSI-ReportConfig* is included (in this case, the cell on which the report is sent is determined by the received DCI). See TS 38.214 [19], clause 5.2.1.

- PUCCH-Config

The IE *PUCCH-Config* is used to configure UE specific PUCCH parameters (per BWP).

- SRS-Config

The IE *SRS-Config* is used to configure sounding reference signal transmissions or to configure sounding reference signal measurements for CLI. The configuration defines a list of SRS-Resources and a list of SRS-Resource-Sets. Each resource set defines a set of SRS-Resources. The network triggers the transmission of the set of SRS-Resources using a configured aperiodicSRS-ResourceTrigger (L1 DCI).

3GPP RP-193252 and 3GPP RAN2 #111 meeting minutes provide the following description related to NR small data transmissions in RRC_INACTIVE state:

*[From 3GPP RP-193252]*

**3 Justification**

NR supports RRC_INACTIVE state and UEs with infrequent (periodic and/or non-periodic) data transmission are generally maintained by the network in the RRC_INACTIVE state. Until Rel-16, the RRC_INACTIVE state doesn't support data transmission. Hence, the UE has to resume the connection (i.e. move to RRC_CONNECTED state) for any DL (MT) and UL (MO) data. Connection setup and subsequently release to INACTIVE state happens for each data transmission however small and infrequent the data packets are. This results in unnecessary power consumption and signalling overhead.
[...]
Signalling overhead from INACTIVE state UEs for small data packets is a general problem and will become a critical issue with more UEs in NR not only for network performance and efficiency but also for the UE battery performance. In general, any device that has intermittent small data packets in INACTIVE state will benefit from enabling small data transmission in INACTIVE.
The key enablers for small data transmission in NR, namely the INACTIVE state, 2-step, 4-step RACH and configured grant type-1 have already been specified as part of Rel-15 and Rel-16. So, this work builds on these building blocks to enable small data transmission in INACTIVE state for NR.

**4 Objective**

**4.1 Objective of SI or Core part WI or Testing part WI**

This work item enables small data transmission in RRC_INACTIVE state as follows:

- For the RRC_INACTIVE state:

  o UL small data transmissions for RACH-based schemes (i.e. 2-step and 4-step RACH):

    ▪ General procedure to enable UP data transmission for small data packets from INACTIVE state (e.g. using MSGA or MSG3) [RAN2]

    ▪ Enable flexible payload sizes larger than the Rel-16 CCCH message size that is possible currently for INACTIVE state for MSGA and MSG3 to support UP data transmission in UL (actual payload size can be up to network configuration) [RAN2]

    ▪ Context fetch and data forwarding (with and without anchor relocation) in INACTIVE state for RACH-based solutions [RAN2, RAN3]
    Note 1: The security aspects of the above solutions should be checked with SA3

  ∘ Transmission of UL data on pre-configured PUSCH resources (i.e. reusing the configured grant type 1) - when TA is valid

    ▪ General procedure for small data transmission over configured grant type 1 resources from INACTIVE state [RAN2]

    ▪ Configuration of the configured grant type1 resources for small data transmission in UL for INACTIVE state [RAN2]

No new RRC state should be introduced in this WID. Transmission of smalldata in UL, subsequent transmission of smalldata in UL and DL and the state transition decisions should be under network control.
[...]

*[From 3GPP RAN2 #111 meeting minutes]*

**8.6.2 UL small data transmissions for RACH-based schemes**

> *Agreements*
>
> 1 Small data transmission with RRC message is supported as baseline for RA-based and CG based schemes
>
> [...]
>
> 4 From RAN2 perspective, stored "configuration" in the UE Context is used for the RLC bearer configuration for any SDT mechanism (RACH and CG).
>
> 5 The 2-step RACH or 4-step RACH should be applied to RACH based uplink small data transmission in RRC_ INACTIVE
>
> 6 The uplink small data can be sent in MSGA of 2-step RACH or msg3 of 4-step RACH.
>
> 7 Small data transmission is configured by the network on a per DRB basis
>
> [...]
>
> 9 UL/DL transmission following UL SDT without transitioning to RRC_CONNECTED is supported 10 When UE is in RRC_INACTIVE, it should be possible to send multiple UL and DL packets as part of the same SDT mechanism and without transitioning to RRC_CONNECTED on dedicated grant. FFS on details and whether any indication to network is needed.

3GPP TS 38.213 provides the following description related to Channel State Information (CSI) reporting:

**9 UE procedure for reporting control information**

**9.2 UCI reporting in physical uplink control channel**

UCI types reported in a PUCCH include HARQ-ACK information, SR, LRR, and CSI. UCI bits include HARQ-ACK information bits, if any, SR information bits, if any, LRR information bit, if any, and CSI bits, if any. The HARQ-ACK information bits correspond to a HARQ-ACK codebook as described in Clause 9.1. For the remaining of this clause, any reference to SR is applicable for SR and/or for LRR.

**9.2.1 PUCCH Resource Sets**

If a UE does not have dedicated PUCCH resource configuration, provided by *PUCCH-ResourceSet* in *PUCCH-Config,* a PUCCH resource set is provided by *pucch-ResourceCommon* through an index to a row of Table 9.2.1-1 for transmission of HARQ-ACK information on PUCCH in an initial UL BWP of $N_{\mathrm{BWP}}^{\mathrm{size}}$ PRBs.

The PUCCH resource set includes sixteen resources, each corresponding to a PUCCH format, a first symbol, a duration, a PRB offset $RB_{\mathrm{BWP}}^{\mathrm{offset}}$, and a cyclic shift index set for a PUCCH transmission.

The UE transmits a PUCCH using frequency hopping if not provided *useInterlacePUCCH-PUSCH* in *BWP-UplinkCommon;* otherwise, the UE transmits a PUCCH without frequency hopping.

An orthogonal cover code with index 0 is used for a PUCCH resource with PUCCH format 1 in Table 9.2.1-1.

The UE transmits the PUCCH using the same spatial domain transmission filter as for a PUSCH transmission scheduled by a RAR UL grant as described in Clause 8.3.

In general, the RRC_INACTIVE state was introduced for UEs with infrequent data transmission. When there is no data transmission, the UE could be put into RRC_INACTIVE state (i.e. the RRC connection is suspended) for reducing power consumption. The current serving gNB would store (or maintain) the UE context (e.g. configurations and identities of the UE) for the UE while the UE is in RRC _INACTIVE state. Upon data arrival, the UE could resume the RRC connection from RRC _INACTIVE state, which is faster than establishing a new RRC connection from RRC_IDLE state. After resuming the RRC connection (e.g. after successful completion of a RA procedure), the UE is able to transmit data (e.g. data from application layer) in RRC_CONNECTED state as usual.

In addition, the UE is able to resume the Radio Resource Control (RRC) connection on a different gNB (i.e. new gNB) than the original gNB (i.e. old gNB) in which the RRC connection was suspended. In this case, the new gNB tries to retrieve the UE context from the old gNB. If the new gNB fails to retrieve the UE context, fallback to RRC connection setup procedure may take place (i.e. establishing a new RRC connection). When RRC connection of a UE is suspended, the UE will store (part of) its current RRC configuration in the "UE Inactive AS context". After a UE initiates the RRC Resume procedure on a Cell (which will be considered as the SpCell after the RRC connection is successfully resumed in this Cell) and before the UE transmits the *RRCResumeRequest* message, the UE will restore part of the stored RRC configuration from the UE Inactive AS context, as specified in Section 5.3.13.3 of 3GPP TS 38.331. More details for RRC _INACTIVE state are provided above and could be found in 3GPP TS 38.300 and TS 38.331.

Although the RRC_INACTIVE state brings benefit as stated above, currently the UE is not able to transmit (user-plane) data in RRC_INACTIVE state. That is, the UE needs to enter RRC _CONNECTED state before transmitting the data. After transmitting the data, the UE is put into RRC _INACTIVE state again. The above steps happen for each data transmission regardless of the amount of data and how frequent the data arrives, which may result in power consumption and signaling overhead.

To mitigate the problem, small data transmission in RRC_INACTIVE state is to be introduced, as discussed in 3GPP RP-193252. In general, the main objective of small data transmission is to enable the UE to transmit data in RRC_INACTIVE state without (or before) entering RRC_CONNECTED state. Possible solutions may be based on 2-step RACH, 4-step RACH, and/or pre-configured PUSCH resources (e.g. similar to Type-1 configured grant in NR). Small data transmission in RRC_INACTIVE state may be referred to as "SDT in RRC_INACTIVE state" and/or "SDT procedure" and/or "SDT".

For example, when a UE performs 2-step RACH based SDT procedure in a Cell, the UE includes Uplink (UL) data together with a RRCResumeRequest message in the MsgA. For example, when a UE performs 4-step Random Access Channel (RACH) based SDT procedure in a Cell, the UE includes UL data together with a RRCResumeRequest message in the Msg3. For example, when a UE performs pre-configured Physical Uplink Shared Channel (PUSCH) resources based SDT procedure in a Cell, the UE includes UL data together with a RRCResumeRequest message in the Protocol Data Unit (PDU) to be transmitted using the pre-configured PUSCH resources. It is possible that a new RRC message is introduced for the SDT procedure (replacing the RRCResumeRequest message as mentioned above). It may be possible that the UL data is transmitted without a RRC message.

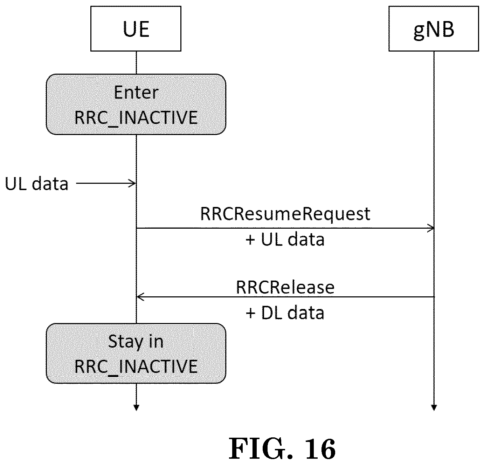

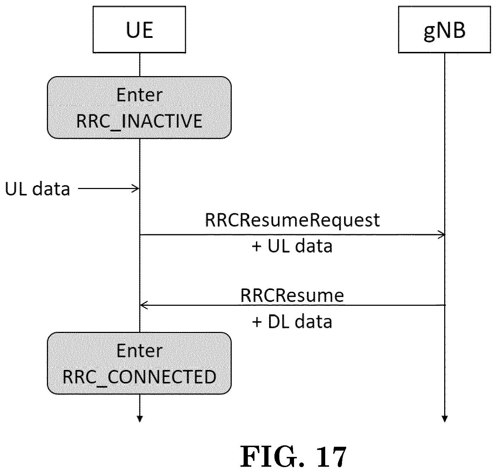

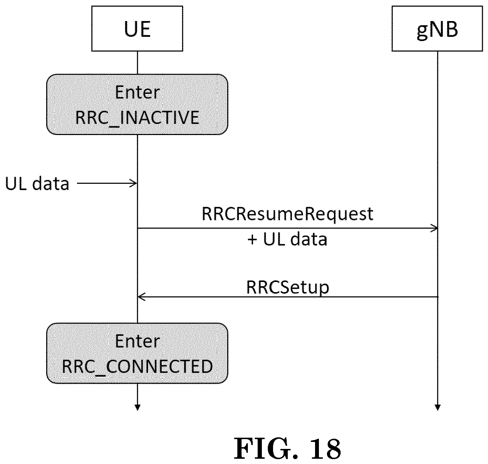

FIG. 16 illustrates a first example of small data transmission (SDT) in RRC_INACTIVE state, according to one embodiment. In this example, the UE stays in RRC_INACTIVE state after performing SDT (e.g. in case no more data are expected to be transmitted). FIG. 17 illustrates a second example of small data transmission (SDT) in RRC_INACTIVE state. In this example, the SDT procedure falls back to RRCResume (e.g. in case more data are expected to be transmitted). FIG. 18 illustrates a third example of small data transmission (SDT) in RRC_INACTIVE state. In this example, the SDT procedure falls back to RRCSetup (e.g. in case the gNB fails to retrieve the UE context of the UE performing SDT).

Typically, the data transmission of a SDT procedure comprises a first UL transmission (e.g. the Msg3 of a 4-step RACH or the MsgA of a 2-step RACH) followed by a first Downlink (DL) transmission (e.g. the Msg4 of a 4-step RACH or the MsgB of a 2-step RACH). If there is more data which could not be transmitted/received within the first UL/DL transmission, the network may transit the UE into RRC_CONNECTED state for transmitting/receiving the more data. It is possible that subsequent transmission(s) could take place while the UE is still in RRC_INACTIVE state.

For example, a second UL transmission could follow the first DL transmission and the UE could stay in RRC_INACTIVE after performing the second UL transmission (and receiving "ACK" response from the network). For example, a second DL transmission could follow the second UL transmission and the UE could stay in RRC _INACTIVE after performing the second DL transmission (and transmitting "ACK" to the network). "The completion of a SDT procedure" could refer to the last transmission (e.g. the second UL transmission or the second DL transmission as described above) of the subsequent transmission(s). The RRCRelease message could be included in the first DL transmission rather than the second DL transmission in case the second DL transmission is the last DL transmission in a SDT procedure.

Alternatively, the RRCRelease message could be included in the second DL transmission rather than the first DL transmission in case the second DL transmission is the last DL transmission in a SDT procedure. The subsequent transmission(s) could be considered as part of the SDT procedure. The network could indicate, in the first DL transmission, whether there is subsequent transmission(s) in a SDT procedure. The network could indicate, in the first DL transmission, whether the UE is allowed to perform subsequent transmission(s) in a SDT procedure. The subsequent transmission(s) in a SDT procedure may comprise at least one UL transmission. The subsequent transmission(s) in a SDT procedure may comprise at least one DL transmissions. In case there is subsequent transmission(s), the second UL transmission in a SDT procedure may also be referred to as the first subsequent UL transmission (and so on). In case there is subsequent transmission(s), the second DL transmission in a SDT procedure may also be referred to as the first subsequent DL transmission (and so on).

A SDT procedure referred in the following paragraph could comprise a RA procedure for SDT and the subsequent transmission(s) (after the RA procedure). The subsequent transmission(s) could be scheduled by the network with dynamic uplink grant or downlink assignment (via PDCCH). The subsequent transmission(s) could be scheduled by the network without dynamic uplink grant (e.g. the subsequent transmission(s) via configured grant).

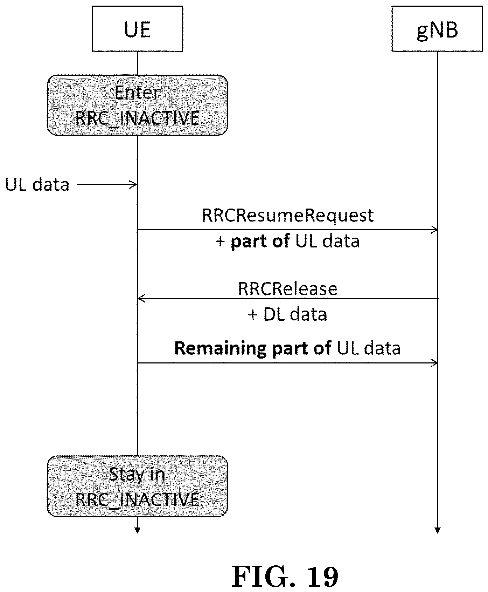

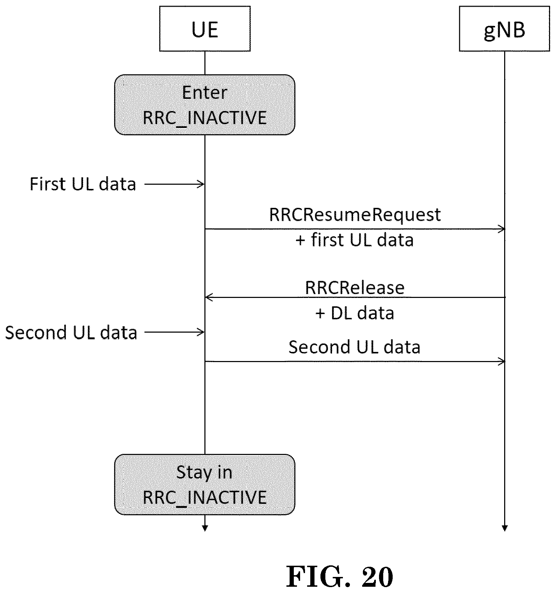

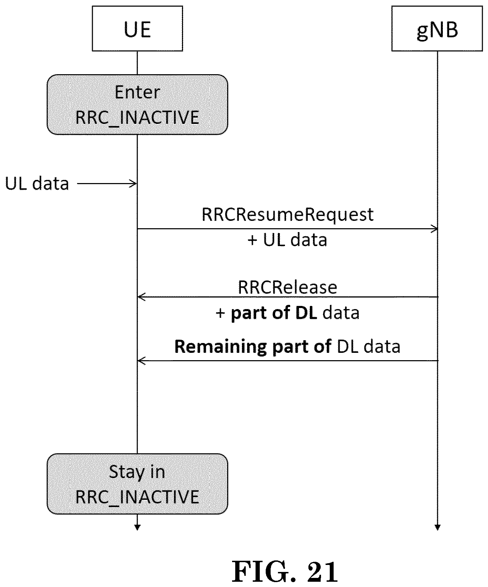

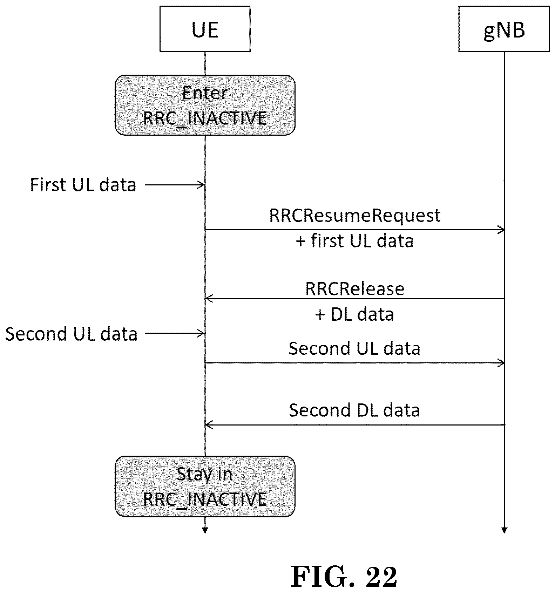

FIG. 19 illustrates a first example that there is one subsequent UL transmission in a SDT procedure according to one embodiment. The subsequent UL transmission is used to transmit the remaining UL data (e.g. the remaining part of the UL data in FIG. 19) which could not be transmitted within the first UL transmission (e.g. the part of the UL data in FIG. 19). FIG. 20 illustrates a second example that there is one subsequent UL transmission in a SDT procedure according to one embodiment. The subsequent UL transmission is used to transmit the UL data (e.g. the second UL data in FIG. 20) which arrives after the UE receives the DL data from the network. FIG. 21 illustrates a first example that there is one subsequent DL transmission in a SDT procedure according to one embodiment. The subsequent DL transmission is used to transmit the remaining DL data (e.g. the remaining part of the DL data in FIG. 21) which could not be transmitted within the first DL transmission (e.g. the part of the DL data in FIG. 21). FIG. 22 illustrates a second example that there is one subsequent DL transmission in a SDT procedure according to one embodiment. The subsequent DL transmission is used to transmit the DL data (e.g. the second DL data in FIG. 22) which arrives after the network receives the second UL data from the UE.

During the RRC Resume procedure (e.g. a Random Access (RA) procedure) on a Cell, the UE monitors Physical Downlink Control Channel (PDCCH) based on the PDCCH-related configuration provided in System Information (e.g. MIB, SIB 1) of the Cell. In response to successful reception of RRCResume message, the UE may restore the PDCCH-related configuration from its stored UE Inactive Access Stratum (AS) context, and the network may also provide PDCCH-related configuration in the RRCResume message. In other words, the UE uses the PDCCH-related configuration provided in System Information until successful reception of RRCResume message. The PDCCH-related configuration could comprise Control Resource Set (CORESET) configuration (e.g. *controlResourceSetToAddModList, ControlResourceSet)*. The PDCCH-related configuration could comprise search space configuration (e.g. *searchSpacesToAddModList, SearchSpace)*. The PDCCH-related configuration could comprise TCI states configuration for PDCCH (e.g. *tci-StatesPDCCH ToAddList)*.

For RACH based SDT procedure, it is assumed that during the RA procedure for SDT on a Cell, the UE monitors PDCCH (for receiving e.g. Msg2, Msg4, or MsgB [2]) based on the PDCCH-related configuration provided in System Information (e.g. MIB or SIB 1) of the Cell. The PDCCH-related configuration used during the RA procedure for SDT could be the same as the PDCCH-related configuration used during the RA procedure **not** for SDT. The PDCCH-related configuration used during the RA procedure for SDT could be different from the PDCCH-related configuration used during the RA procedure **not** for SDT. For example, the CORESET configuration used during the RA procedure for SDT could be the same as the CORESET configuration used during the RA procedure **not** for SDT (e.g. *controlResourceSetZero)*, while the search space configuration used during the RA procedure for SDT (e.g. other than *ra-SearchSpace)* could be different from the search space configuration used during the RA procedure **not** for SDT (e.g. *ra-SearchSpace)*.

For example, the CORESET configuration used during the RA procedure for SDT (e.g. other than *controlResourceSetZero)* could be different from the CORESET configuration used during the RA procedure **not** for SDT (e.g. *controlResourceSetZero)*, while the search space configuration used during the RA procedure for SDT could be the same as the search space configuration used during the RA procedure **not** for SDT (e.g. *ra-SearchSpace)*. For example, both the CORESET configuration and the search space configuration used during the RA procedure for SDT could be the same as the CORESET configuration and the search space configuration used during the RA procedure **not** for SDT. For example, both the CORESET configuration and the search space configuration used during the RA procedure for SDT could be different from the CORESET configuration and the search space configuration used during the RA procedure **not** for SDT.

The network could indicate which PDCCH-related configuration among the PDCCH-related configuration(s) provided in System Information is to be used by the UE during the RA procedure for SDT. For example, the network provides a list of search space configurations in System Information, and an indication indicates that which search space among the list is to be used during the RA procedure for SDT. The indication could be provided in System Information (e.g. SIB1). The indication could be provided in a dedicated signaling (e.g. RRCRelease message) to the UE. Alternatively, the network directly provides a second search space configuration in System Information, wherein this second search space configuration is for RA procedures for SDT but not for RA procedures **not** for SDT.

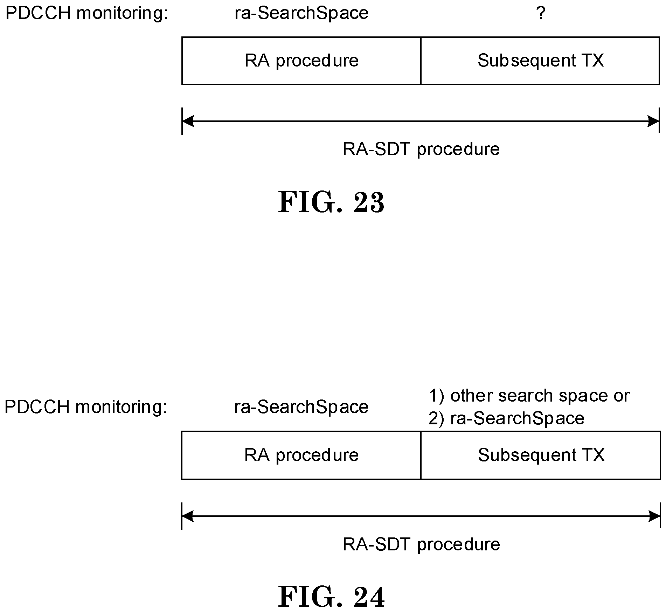

In case there is subsequent transmission(s) in a RACH based SDT procedure, since the RA procedure will be considered as completed in response to successful reception of the first DL transmission (e.g. Msg4 or MsgB) of the SDT procedure, it is unclear which PDCCH-related configuration is used by the UE to monitor PDCCH during (the phase of) the subsequent transmission(s), e.g. to monitor PDCCH in order to receive scheduling (e.g. dynamic uplink grant or downlink assignment) for the subsequent transmission(s). An example is shown in FIG. 23.

For the subsequent transmission(s) in a RACH based SDT procedure, the UE could monitor PDCCH based on at least one of the following alternatives:

*1. The PDCCH-related configuration used for the subsequent transmission(s) is the same as the one used during the RA procedure for SDT*

For example, the network provides a first CORESET configuration in System Information. The UE uses the first CORESET configuration during RA procedures not for SDT as well as during RA procedures for SDT, and the UE also uses the first CORESET configuration during the subsequent transmission(s) in a SDT procedure. For example, the network provides a first and a second CORESET configuration in System Information. The UE uses the first CORESET configuration during RA procedures not for SDT, and the UE uses the second CORESET configuration during RA procedures for SDT, and the UE also uses the second CORESET configuration during the subsequent transmission(s) in a SDT procedure.

For example, the network provides a first search space configuration in System Information. The UE uses the first search space configuration during RA procedures not for SDT as well as during RA procedures for SDT, and the UE also uses the first search space configuration during the subsequent transmission(s) in a SDT procedure. For example, the network provides a first and a second search space configuration in System Information. The UE uses the first search space configuration during RA procedures not for SDT, and the UE uses the second search space configuration during RA procedures for SDT, and the UE also uses the second search space configuration during the subsequent transmission(s) in a SDT procedure.

Since the PDCCH-related configuration used during the RA procedure for SDT is provided in System Information, there may be some restrictions for the network on scheduling the UE during the subsequent transmission(s). For example, since the search space #0 (i.e. *SearchSpaceZero*) provided in MIB is common search space, the network is not able to schedule the UE using Downlink Control Information (DCI) format 0_1 or DCI format 1_1 if the UE is monitoring PDCCH using this search space configuration.

The PDCCH-related configuration for the SDT procedure could be provided in SIB 1. The PDCCH-related configuration for the SDT procedure could be provided in a System Information Block (other than SIB1), e.g. the SIB providing configurations related to SDT.

The network could provide an indication to indicate which PDCCH-related configuration among the PDCCH-related configuration(s) provided in System Information is to be used by the UE during the RA procedure for SDT. The indication could be *ra-searchspace.* The indication could be other than *ra-searchspace.*

*2. The PDCCH-related configuration used for the subsequent transmission(s) is also provided in System Information (e.g. MIB or SIB1) but could be different from the PDCCH-related configuration used during the RA procedure for SDT*

For example, the network provides a first and a second CORESET configuration in System Information. The UE uses the first CORESET configuration during RA procedures not for SDT as well as during RA procedures for SDT, and the UE uses the second CORESET configuration during the subsequent transmission(s) in a SDT procedure. For example, the network provides a first, a second, and a third CORESET configuration in System Information. The UE uses the first CORESET configuration during RA procedures not for SDT, and the UE uses the second CORESET configuration during RA procedures for SDT, and the UE also uses the third CORESET configuration during the subsequent transmission(s) in a SDT procedure.

For example, the network provides a first and a second search space configuration in System Information. The UE uses the first search space configuration during RA procedures not for SDT as well as during RA procedures for SDT, and the UE uses the second search space configuration during the subsequent transmission(s) in a SDT procedure. For example, the network provides a first, a second, and a third search space configuration in System Information. The UE uses the first search space configuration during RA procedures not for SDT, and the UE uses the second search space configuration during RA procedures for SDT, and the UE also uses the third search space configuration during the subsequent transmission(s) in a SDT procedure.

Since the PDCCH-related configuration used for the subsequent transmission(s) is provided in System Information, there may be some restrictions for the network on scheduling the UE during the subsequent transmission(s). The search space used for the subsequent transmission(s) could be a common search space. For example, since the list of search spaces (i.e. *commonSearchSpaceList*) provided in SIB 1 are common search spaces, the network is not able to schedule the UE using DCI format 0_1 or DCI format 1_1 if the UE is monitoring PDCCH using a search space among this list.

The PDCCH-related configuration for the SDT procedure (e.g. used for the subsequent transmission(s)) could be provided in SIB 1. The PDCCH-related configuration for the SDT procedure could be provided in a System Information Block (other than SIB1), e.g. the SIB providing configurations related to SDT.

The network could provide a first indication to indicate which PDCCH-related configuration among the PDCCH-related configuration(s) provided in System Information is to be used by the UE during the RA procedure for SDT. The first indication could be *ra-searchspace.* The first indication could be other than *ra-searchspace.* The network could provide a second indication to indicate which PDCCH-related configuration among the PDCCH-related configuration(s) provided in System Information is to be used by the UE for the subsequent transmission(s). The second indication could be different from the first indication.

*3. The PDCCH-related configuration used for the subsequent transmission(s) is provided in the first DL transmission (e.g. Msg4 or MsgB) of the SDT procedure*

The network could directly provide the PDCCH-related configuration in the first DL transmission of the SDT procedure to the UE. In response to receiving the PDCCH-related configuration in the first DL transmission of the SDT procedure, the UE could monitor PDCCH during the subsequent transmission(s) in the SDT procedure, based on the received PDCCH-related configuration.

For example, the network provides a first CORESET configuration in System Information and the network provides a second CORESET configuration in the first DL transmission of a SDT procedure. The UE uses the first CORESET configuration during RA procedures for SDT, and the UE uses the second CORESET configuration during the subsequent transmission(s) in the SDT procedure. For example, the network provides a first search space configuration in System Information and the network provides a second search space configuration in the first DL transmission of a SDT procedure. The UE uses the first search space configuration during RA procedures for SDT, and the UE uses the second search space configuration during the subsequent transmission(s) in the SDT procedure.

For example, the network provides Transport Configuration Indicator (TCI) states configuration for PDCCH in the first DL transmission of a SDT procedure. The UE uses the TCI states configuration for PDCCH during the subsequent transmission(s) in the SDT procedure.

The PDCCH-related configuration provided in a first SDT procedure could be used for a second SDT procedure initiated after the first SDT procedure has been completed. For example, while the UE is in RRC_INACTIVE state, the network could transmit a RRCRelease message with *suspendConfig* to complete a first SDT procedure initiated by the UE. The network could provide the PDCCH-related configuration in the RRCRelease message, so that later when the UE initiates a second SDT procedure, the UE could use the previously provided PDCCH-related configuration for monitoring PDCCH during the subsequent transmission(s) in the second SDT procedure.

The PDCCH-related configuration in the first DL transmission could be included in a RRC message (e.g. RRCRelease message).

Because the PDCCH-related configuration is provided in a dedicated signaling (e.g. RRCRelease message) to a UE, the network could provide the configuration which is suitable for scheduling the subsequent transmission(s) for this UE. For example, the network could provide a search space configuration which is UE-specific search space, and thus the network is able to schedule the UE with DCI format 0_1 or DCI format 1_1. For example, the network could provide the TCI states configuration for PDCCH, and the network could indicate, with a TCI state indication for PDCCH MAC control element, the TCI state used for monitoring PCCCH.

*4. The PDCCH-related configuration used for the subsequent transmission(s) is the one which was used by the UE in previous RRC CONNECTED state*

Upon entering RRC_INACTIVE state from RRC_CONNECTED state, the UE will store (part of) its current RRC configuration in the UE Inactive AS context. The UE Inactive AS context also contains the PDCCH-related configuration. The UE could restore the PDCCH-related configuration from the UE Inactive AS context, for monitoring PDCCH during the subsequent transmission(s).

For example, in response to receiving an indication from the network indicating that there is subsequent transmission(s) in a SDT procedure, the UE restores the CORESET configuration from the UE Inactive AS context, and uses the restored CORESET configuration for monitoring PDCCH during the subsequent transmission(s). For example, in response to receiving an indication from the network indicating that there is subsequent transmission(s) in a SDT procedure, the UE restores the search space configuration from the UE Inactive AS context, and uses the restored search space configuration for monitoring PDCCH during the subsequent transmission(s).

For example, in response to receiving an indication from the network indicating that there is subsequent transmission(s) in a SDT procedure, the UE restores the TCI states configuration for PDCCH from the UE Inactive AS context, and uses the restored TCI states configuration for PDCCH for monitoring PDCCH during the subsequent transmission(s).

Because the stored PDCCH-related configuration is dedicated configuration of a UE, it may be more suitable for scheduling the subsequent transmission(s) for this UE. For example, the stored PDCCH-related configuration contains a search space which is UE-specific search space, and thus the network is able to schedule the UE with DCI format 0_1 or DCI format 1_1. For example, the stored PDCCH-related configuration contains the TCI states configuration for PDCCH, and the network could indicate, with a TCI state indication for PDCCH MAC control element, the TCI state used for monitoring PDCCH.

The UE could restore the PDCCH-related configuration of its SpCell (e.g. the PCell in previous RRC connection). In case there is multiple DL BWPs (under the SpCell) in the UE Inactive AS context, the UE could restore the PDCCH-related configuration under the initial DL BWP. Additionally or alternatively, the network could indicate (e.g. in Msg4 or MsgB) which DL BWP among the multiple DL BWPs the UE restores the PDCCH-related configuration. For example, if the network does not indicate which DL BWP among the multiple DL BWPs the UE restores the PDCCH-related configuration, the UE restores the PDCCH-related configuration under the initial DL BWP. For example, if the network indicates (e.g. in Msg4 or MsgB) which DL BWP among the multiple DL BWPs the UE restores the PDCCH-related configuration, the UE restores the PDCCH-related configuration under the DL BWP indicated by the network.

*5. The PDCCH-related configuration used for the subsequent transmission(s) is provided in the RRCRelease message which transits the UE from RRC CONNECTED state to RRC INACTIVE state*

Before the UE enters RRC_INACTIVE state, the network could provide the PDCCH-related configuration to be used for the subsequent transmission(s) in a SDT procedure initiated by the UE later. In response to receiving the PDCCH-related configuration in the RRCRelease message received in RRC_CONNECTED state triggering state transition, the UE could store the received PDCCH-related configuration in the UE Inactive AS context. The received PDCCH-related configuration could be different from the PDCCH-related configuration(s) which was used by the UE in RRC_CONNECTED state. In other words, the UE could store (at least) two PDCCH-related configurations in the UE Inactive AS context, wherein one is used while the UE is in RRC_CONNECTED state, and the other one is received in the RRCRelease message triggering state transition to RRC_INACTIVE. In response to initiation of a SDT procedure or in response to receiving an indication from the network indicating that there is subsequent transmission(s) in the SDT procedure, the UE could restore the PDCCH-related configuration (to be used for the subsequent transmission(s)) from the UE Inactive AS context.

For example, while the UE is in RRC_CONNECTED state, the network transmits a RRCRelease message with *suspendConfig* to transit the UE into RRC_INACTIVE state. The network could provide the PDCCH-related configuration (to be used for the subsequent transmission(s)) in the RRCRelease message, so that later when the UE initiates a SDT procedure, the UE could use the previously provided PDCCH-related configuration received in the RRCRelease message for monitoring PDCCH during the subsequent transmission(s) in the SDT procedure.

Because the stored PDCCH-related configuration is dedicated configuration of a UE, it may be more suitable for scheduling the subsequent transmission(s) for this UE. For example, the stored PDCCH-related configuration contains a search space which is UE-specific search space, and thus the network is able to schedule the UE with DCI format 0_1 or DCI format 1_1. For example, the stored PDCCH-related configuration contains the TCI states configuration for PDCCH, and the network could indicate, with a TCI state indication for PDCCH MAC control element, the TCI state used for monitoring PDCCH.

Combinations of the above alternatives are possible.

For a first example, if the network provides PDCCH-related configuration in the first DL transmission (e.g. Msg4 or MsgB) of a SDT procedure, the UE uses the provided PDCCH-related configuration for monitoring PDCCH during the subsequent transmission(s) in the SDT procedure (e.g. alternative 3). If the network does not provide PDCCH-related configuration in the first DL transmission (e.g. Msg4 or MsgB) of a SDT procedure, the UE uses the PDCCH-related configuration provided in System Information for monitoring PDCCH during the subsequent transmission(s) in the SDT procedure (e.g. alternative 1 or alternative 2). An example is shown in FIG. 24.

For a second example, if the network provides PDCCH-related configuration in the first DL transmission (e.g. Msg4 or MsgB) of a SDT procedure, the UE uses the provided PDCCH-related configuration for monitoring PDCCH during the subsequent transmission(s) in the SDT procedure (e.g. alternative 3). If the network does not provide PDCCH-related configuration in the first DL transmission (e.g. Msg4 or MsgB) of a SDT procedure, the UE restores the PDCCH-related configuration from the UE Inactive AS context, for monitoring PDCCH during the subsequent transmission(s) in the SDT procedure (e.g. alternative 4).

For a third example, if the network provides (or indicates) a second PDCCH-related configuration in System Information to be used for the subsequent transmission(s), the UE uses the second PDCCH-related configuration for monitoring PDCCH during the subsequent transmission(s) in the SDT procedure (e.g. alternative 2). If the network does not provide (or indicate) a second PDCCH-related configuration in System Information to be used for the subsequent transmission(s), the UE continues using the same PDCCH-related configuration used during the RA procedure for SDT, for monitoring PDCCH during the subsequent transmission(s) in the SDT procedure (e.g. alternative 1). An example is shown in FIG. 24.

For a fourth example, if the network provides a first PDCCH-related configuration in the RRCRelease message transmitted in a first SDT procedure and the network does not provide a second PDCCH-related configuration in the first DL transmission (e.g. Msg4 or MsgB) of a second SDT procedure initiated by the UE after the first SDT procedure has been completed, the UE uses the provided first PDCCH-related configuration for monitoring PDCCH during the subsequent transmission(s) in the second SDT procedure (e.g. alternative 3). If the network provides a first PDCCH-related configuration in the RRCRelease message transmitted in a first SDT procedure and the network also provides a second PDCCH-related configuration in the first DL transmission (e.g. Msg4 or MsgB) of a second SDT procedure initiated by the UE after the first SDT procedure has been completed, the UE uses the provided second PDCCH-related configuration for monitoring PDCCH during the subsequent transmission(s) in the second SDT procedure (e.g. alternative 3).

For a fifth example, if the network provides a first PDCCH-related configuration in the RRCRelease message which transits the UE from RRC_CONNECTED state to RRC_INACTIVE sate and the network does not provide a second PDCCH-related configuration in the first DL transmission (e.g. Msg4 or MsgB) of a SDT procedure, the UE uses the provided first PDCCH-related configuration for monitoring PDCCH during the subsequent transmission(s) in the SDT procedure (e.g. alternative 5). If the network provides a first PDCCH-related configuration in the RRCRelease message which transits the UE from RRC_CONNECTED state to RRC_INACTIVE sate and the network also provides a second PDCCH-related configuration in the first DL transmission (e.g. Msg4 or MsgB) of a SDT procedure, the UE uses the provided second PDCCH-related configuration for monitoring PDCCH during the subsequent transmission(s) in the SDT procedure (e.g. alternative 3).

For a sixth example, if the network provides (or indicates) a first PDCCH-related configuration in System Information to be used for the subsequent transmission(s), and the network does not provide a second PDCCH-related configuration in the RRCRelease message transmitted before the UE initiates a SDT procedure, the UE uses the first PDCCH-related configuration for monitoring PDCCH during the subsequent transmission(s) in the SDT procedure (e.g. alternative 2). If the network provides (or indicates) a first PDCCH-related configuration in System Information to be used for the subsequent transmission(s), and the network also provides a second PDCCH-related configuration in the RRCRelease message transmitted before the UE initiates a SDT procedure, the UE uses the second PDCCH-related configuration for monitoring PDCCH during the subsequent transmission(s) in the SDT procedure (e.g. alternative 3 or alternative 5).

During the RRC Resume procedure (e.g. a RA procedure) on a Cell, the UE performs transmission on Physical Uplink Shared Channel (PUSCH) and/or reception on Physical Downlink Shared Channel (PDSCH) based on the Shared-channel-related configuration provided in System Information (e.g. SIB 1) of the Cell. In response to successful reception of RRCResume message, the UE may restore the Shared-channel-related configuration from its stored UE Inactive AS context, and the network may also provide Shared-channel-related configuration in the RRCResume message. In other words, the UE uses the Shared-channel-related configuration provided in System Information until successful reception of RRCResume message. The Shared-channel-related configuration could comprise PUSCH configuration (e.g. *PUSCH-Config).* The Shared-channel-related configuration could comprise PDSCH configuration (e.g *PDSCH-Config).* The Shared-channel-related configuration could comprise TCI states configuration for PDSCH (e.g. *tci-StatesToAddModList).* The Shared-channel-related configuration could comprise configured grant configuration (e.g. *ConfiguredGrantConfig).* The Shared-channel-related configuration could comprise semi-persistent scheduling configuration (e.g. *SPS-Config).*

For RACH based SDT procedure, it is assumed that during the RA procedure for SDT on a Cell, the UE performs transmission on PUSCH and/or reception on PDSCH based on the Shared-channel-related configuration also provided in System Information (e.g. SIB 1) of the Cell. The Shared-channel-related configuration used during the RA procedure for SDT could be the same as the Shared-channel-related configuration used during the RA procedure **not** for SDT. The Shared-channel-related configuration used during the RA procedure for SDT could be different from the Shared-channel-related configuration used during the RA procedure **not** for SDT.

For example, the PDSCH configuration used during the RA procedure for SDT could be the same as the PDSCH configuration used during the RA procedure **not** for SDT (e.g. *PDSCH-Config),* while the PUSCH configuration used during the RA procedure for SDT (e.g. other than *PUSCH-Config)* could be different from the PUSCH configuration used during the RA procedure **not** for SDT (e.g. *PUSCH-Config).* For example, the PDSCH configuration used during the RA procedure for SDT (e.g. other than *PDSCH-Config)* could be different from the PDSCH configuration used during the RA procedure **not** for SDT (e.g. *PDSCH-Config),* while the PUSCH configuration used during the RA procedure for SDT could be the same as the PUSCH configuration used during the RA procedure **not** for SDT (e.g. *PUSCH Config).*

For example, both the PDSCH configuration and the PUSCH configuration used during the RA procedure for SDT could be the same as the PDSCH configuration and the PUSCH configuration used during the RA procedure **not** for SDT. For example, both the PDSCH configuration and the PUSCH configuration used during the RA procedure for SDT could be different from the PDSCH configuration and the PUSCH configuration used during the RA procedure **not** for SDT.

The network could indicate which Shared-channel-related configuration among the Shared-channel-related configuration(s) provided in System Information is to be used by the UE during the RA procedure for SDT. For example, the network provides a list of PDSCH configurations in System Information, and an indication indicates that which PDSCH among the list is to be used during the RA procedure for SDT. The indication could be provided in System Information (e.g. SIB1). The indication could be provided in a dedicated signaling (e.g. RRCRelease message) to the UE. Alternatively, the network directly provides a second PDSCH configuration in System Information, wherein this second PDSCH configuration is for RA procedures for SDT but not for RA procedures **not** for SDT.

In case there is subsequent transmission(s) in a RACH based SDT procedure, since the RA procedure will be considered as completed in response to successful reception of the first DL transmission (e.g. Msg4 or MsgB) of the SDT procedure, it is unclear which Shared-channel-related configuration is used by the UE to perform transmission on PUSCH and/or reception on PDSCH during (the phase of) the subsequent transmission(s).

For the subsequent transmission(s) in a RACH based SDT procedure, the UE could perform transmission on PUSCH and/or reception on PDSCH based on at least one of the following alternatives:

*1. The Shared-channel-related configuration used for the subsequent transmission(s) is the same as the one used during the RA procedure for SDT*

For example, the network provides a first PDSCH configuration in System Information. The UE uses the first PDSCH configuration during RA procedures not for SDT as well as during RA procedures for SDT, and the UE also uses the first PDSCH configuration during the subsequent transmission(s) in a SDT procedure. For example, the network provides a first and a second PDSCH configuration in System Information. The UE uses the first PDSCH configuration during RA procedures not for SDT, and the UE uses the second PDSCH configuration during RA procedures for SDT, and the UE also uses the second PDSCH configuration during the subsequent transmission(s) in a SDT procedure.

For example, the network provides a first PUSCH configuration in System Information. The UE uses the first PUSCH configuration during RA procedures not for SDT as well as during RA procedures for SDT, and the UE also uses the first PUSCH configuration during the subsequent transmission(s) in a SDT procedure. For example, the network provides a first and a second PUSCH configuration in System Information. The UE uses the first PUSCH configuration during RA procedures not for SDT, and the UE uses the second PUSCH configuration during RA procedures for SDT, and the UE also uses the second PUSCH configuration during the subsequent transmission(s) in a SDT procedure.

Since the Shared-channel-related configuration used during the RA procedure for SDT is provided in System Information, there may be some restrictions for the network on scheduling the UE during the subsequent transmission(s).

The Shared-channel-related configuration for the SDT procedure could be provided in SIB1. The Shared-channel-related configuration for the SDT procedure could be provided in a System Information Block (other than SIB1), e.g. the SIB providing configurations related to SDT.

The network could provide an indication to indicate which Shared-channel-related configuration among the Shared-channel-related configuration(s) provided in System Information is to be used by the UE during the RA procedure for SDT.

*2. The Shared-channel-related configuration used for the subsequent transmission(s) is also provided in System Information but could be different from the Shared-channel-related configuration used during the RA procedure for SDT*

For example, the network provides a first and a second PDSCH configuration in System Information. The UE uses the first PDSCH configuration during RA procedures not for SDT as well as during RA procedures for SDT, and the UE uses the second PDSCH configuration during the subsequent transmission(s) in a SDT procedure. For example, the network provides a first, a second, and a third PDSCH configuration in System Information. The UE uses the first PDSCH configuration during RA procedures not for SDT, and the UE uses the second PDSCH configuration during RA procedures for SDT, and the UE also uses the third PDSCH configuration during the subsequent transmission(s) in a SDT procedure.

For example, the network provides a first and a second PUSCH configuration in System Information. The UE uses the first PUSCH configuration during RA procedures not for SDT as well as during RA procedures for SDT, and the UE uses the second PUSCH configuration during the subsequent transmission(s) in a SDT procedure. For example, the network provides a first, a second, and a third PUSCH configuration in System Information. The UE uses the first PUSCH configuration during RA procedures not for SDT, and the UE uses the second PUSCH configuration during RA procedures for SDT, and the UE also uses the third PUSCH configuration during the subsequent transmission(s) in a SDT procedure.

Since the Shared-channel-related configuration used for the subsequent transmission(s) is provided in System Information, there may be some restrictions for the network on scheduling the UE during the subsequent transmission(s).

The Shared-channel-related configuration for the SDT procedure could be provided in SIB1. The Shared-channel-related configuration for the SDT procedure could be provided in a System Information Block (other than SIB1), e.g. the SIB providing configurations related to SDT.

The network could provide a first indication to indicate which Shared-channel-related configuration among the Shared-channel-related configuration(s) provided in System Information is to be used by the UE during the RA procedure for SDT. The network could provide a second indication to indicate which Shared-channel-related configuration among the Shared-channel-related configuration(s) provided in System Information is to be used by the UE for the subsequent transmission(s). The second indication could be different from the first indication.

*3. The Shared-channel-related configuration used for the subsequent transmission(s) is provided in the first DL transmission (e.g. Msg4 or MsgB) of the SDT procedure*

The network could directly provide the Shared-channel-related configuration in the first DL transmission of the SDT procedure to the UE. In response to receiving the Shared-channel-related configuration in the first DL transmission of the SDT procedure, the UE could perform transmission on PUSCH and/or reception on PDSCH during the subsequent transmission(s) in the SDT procedure, based on the received Shared-channel-related configuration.

For example, the network provides a first PDSCH configuration in System Information and the network provides a second PDSCH configuration in the first DL transmission of a SDT procedure. The UE uses the first PDSCH configuration during RA procedures for SDT, and the UE uses the second PDSCH configuration during the subsequent transmission(s) in the SDT procedure. For example, the network provides a first PUSCH configuration in System Information and the network provides a second PUSCH configuration in the first DL transmission of a SDT procedure. The UE uses the first PUSCH configuration during RA procedures for SDT, and the UE uses the second PUSCH configuration during the subsequent transmission(s) in the SDT procedure.

For example, the network provides TCI states configuration for PDSCH in the first DL transmission of a SDT procedure. The UE uses the TCI states configuration for PDSCH during the subsequent transmission(s) in the SDT procedure.

The Shared-channel-related configuration provided in a first SDT procedure could be used for a second SDT procedure initiated after the first SDT procedure has been completed. For example, while the UE is in RRC_INACTIVE state, the network could transmit a RRCRelease message with *suspendConfig* to complete a first SDT procedure initiated by the UE. The network could provide the Shared-channel-related configuration in the RRCRelease message, so that later when the UE initiates a second SDT procedure, the UE could use the previously provided Shared-channel-related configuration for performing transmission on PUSCH and/or reception on PDSCH during the subsequent transmission(s) in the second SDT procedure.

The Shared-channel-related configuration in the first DL transmission could be included in a RRC message (e.g. RRCRelease message).

Because the Shared-channel-related configuration is provided in a dedicated signaling (e.g. RRCRelease message) to a UE, the network could provide the configuration which is suitable for scheduling the subsequent transmission(s) for this UE. For example, the network could provide the TCI states configuration for PDSCH, and the network could indicate, with DCI format 1_1, the TCI state used for receiving PDSCH.

*4. The Shared-channel-related configuration used for the subsequent transmission(s) is the one which was used by the UE in previous RRC CONNECTED state*

Upon entering RRC _INACTIVE state from RRC_CONNECTED state, the UE will store (part of) its current RRC configuration in the UE Inactive AS context. The UE Inactive AS context also contains the Shared-channel-related configuration. The UE could restore the Shared-channel-related configuration from the UE Inactive AS context, for performing transmission on PUSCH and/or reception on PDSCH during the subsequent transmission(s).

For example, in response to receiving an indication from the network indicating that there is subsequent transmission(s) in a SDT procedure, the UE restores the PDSCH configuration from the UE Inactive AS context, and use the restored PDSCH configuration for performing reception on PDSCH during the subsequent transmission(s). For example, in response to receiving an indication from the network indicating that there is subsequent transmission(s) in a SDT procedure, the UE restores the PUSCH configuration from the UE Inactive AS context, and use the restored PUSCH configuration for performing transmission on PUSCH during the subsequent transmission(s).

For example, in response to receiving an indication from the network indicating that there is subsequent transmission(s) in a SDT procedure, the UE restores the TCI states configuration for PDSCH from the UE Inactive AS context, and use the restored TCI states configuration for PDSCH for performing reception on PDSCH during the subsequent transmission(s).

Because the stored Shared-channel-related configuration is dedicated configuration of a UE, it may be more suitable for scheduling the subsequent transmission(s) for this UE. For example, the stored Shared-channel-related configuration contains the TCI states configuration for PDSCH, and the network could indicate, with DCI format 1_1, the TCI state used for receiving PDSCH.

The UE could restore the Shared-channel-related configuration of its SpCell (e.g. the PCell in previous RRC connection). In case there is multiple DL BWPs (under the SpCell) in the UE Inactive AS context, the UE could restore the Shared-channel-related configuration under the initial DL BWP. Additionally or alternatively, the network could indicate (e.g. in Msg4 or MsgB) which DL BWP among the multiple DL BWPs the UE restores the Shared-channel-related configuration.

For example, if the network does not indicate which DL BWP among the multiple DL BWPs the UE restores the Shared-channel-related configuration, the UE restores the Shared-channel-related configuration under the initial DL BWP. For example, if the network indicates (e.g. in Msg4 or MsgB) which DL BWP among the multiple DL BWPs the UE restores the Shared-channel-related configuration, the UE restores the Shared-channel-related configuration under the DL BWP indicated by the network. In case there is multiple UL BWPs (under the SpCell) in the UE Inactive AS context, the UE could restore the Shared-channel-related configuration under the initial UL BWP.

Additionally or alternatively, the network could indicate (e.g. in Msg4 or MsgB) which UL BWP among the multiple UL BWPs the UE restores the Shared-channel-related configuration. For example, if the network does not indicate which UL BWP among the multiple UL BWPs the UE restores the Shared-channel-related configuration, the UE restores the Shared-channel-related configuration under the initial UL BWP. For example, if the network indicates (e.g. in Msg4 or MsgB) which UL BWP among the multiple UL BWPs the UE restores the Shared-channel-related configuration, the UE restores the Shared-channel-related configuration under the UL BWP indicated by the network.

*5. The Shared-channel-related configuration used for the subsequent transmission(s) is provided in the RRCRelease message which transits the UE from RRC CONNECTED state to RRC INACTIVE state*

Before the UE enters RRC_INACTIVE state, the network could provide the Shared-channel-related configuration to be used for the subsequent transmission(s) in a SDT procedure initiated by the UE later. In response to receiving the Shared-channel-related configuration in the RRCRelease message received in RRC_CONNECTED state triggering state transition, the UE could store the received Shared-channel-related configuration in the UE Inactive AS context. The received Shared-channel-related configuration could be different from the Shared-channel-related configuration(s) which was used by the UE in RRC_CONNECTED state. In other words, the UE could store (at least) two Shared-channel-related configurations in the UE Inactive AS context, wherein one is used while the UE is in RRC_CONNECTED state, and the other one is received in the RRCRelease message triggering state transition to RRC_INACTIVE. In response to initiation of a SDT procedure or in response to receiving an indication from the network indicating that there is subsequent transmission(s) in the SDT procedure, the UE could restore the Shared-channel-related configuration (to be used for the subsequent transmission(s)) from the UE Inactive AS context.

For example, while the UE is in RRC_CONNECTED state, the network transmits a RRCRelease message with *suspendConfig* to transit the UE into RRC_INACTIVE state. The network could provide the Shared-channel-related configuration (to be used for the subsequent transmission(s)) in the RRCRelease message, so that later when the UE initiates a SDT procedure, the UE could use the previously provided Shared-channel-related configuration received in the RRCRelease message for performing transmission on PUSCH and/or reception on PDSCH during the subsequent transmission(s) in the SDT procedure.

Because the stored Shared-channel-related configuration is dedicated configuration of a UE, it may be more suitable for scheduling the subsequent transmission(s) for this UE. For example, the stored Shared-channel-related configuration contains the TCI states configuration for PDSCH, and the network could indicate, with DCI format 1_1, the TCI state used for receiving PDSCH.

Combinations of the above alternatives are possible.

For a first example, if the network provides Shared-channel-related configuration in the first DL transmission (e.g. Msg4 or MsgB) of a SDT procedure, the UE uses the provided Shared-channel-related configuration for performing transmission on PUSCH and/or reception on PDSCH during the subsequent transmission(s) in the SDT procedure (e.g. alternative 3). If the network does not provide Shared-channel-related configuration in the first DL transmission (e.g. Msg4 or MsgB) of a SDT procedure, the UE uses the Shared-channel-related configuration provided in System Information for performing transmission on PUSCH and/or reception on PDSCH during the subsequent transmission(s) in the SDT procedure (e.g. alternative 1 or alternative 2).

For a second example, if the network provides Shared-channel-related configuration in the first DL transmission (e.g. Msg4 or MsgB) of a SDT procedure, the UE uses the provided Shared-channel-related configuration for performing transmission on PUSCH and/or reception on PDSCH during the subsequent transmission(s) in the SDT procedure (e.g. alternative 3). If the network does not provide Shared-channel-related configuration in the first DL transmission (e.g. Msg4 or MsgB) of a SDT procedure, the UE restores the Shared-channel-related configuration from the UE Inactive AS context, for performing transmission on PUSCH and/or reception on PDSCH during the subsequent transmission(s) in the SDT procedure (e.g. alternative 4).

For a third example, if the network provides (or indicates) a second Shared-channel-related configuration in System Information to be used for the subsequent transmission(s), the UE uses the second Shared-channel-related configuration for performing transmission on PUSCH and/or reception on PDSCH during the subsequent transmission(s) in the SDT procedure (e.g. alternative 2). If the network does not provide (or indicate) a second Shared-channel-related configuration in System Information to be used for the subsequent transmission(s), the UE continues using the same Shared-channel-related configuration used during the RA procedure for SDT, for performing transmission on PUSCH and/or reception on PDSCH during the subsequent transmission(s) in the SDT procedure (e.g. alternative 1).

For a fourth example, if the network provides a first Shared-channel-related configuration in the RRCRelease message transmitted in a first SDT procedure and the network does not provide a second Shared-channel-related configuration in the first DL transmission (e.g. Msg4 or MsgB) of a second SDT procedure initiated by the UE after the first SDT procedure has been completed, the UE uses the provided first Shared-channel-related configuration for performing transmission on PUSCH and/or reception on PDSCH during the subsequent transmission(s) in the second SDT procedure (e.g. alternative 3). If the network provides a first Shared-channel-related configuration in the RRCRelease message transmitted in a first SDT procedure and the network also provides a second Shared-channel-related configuration in the first DL transmission (e.g. Msg4 or MsgB) of a second SDT procedure initiated by the UE after the first SDT procedure has been completed, the UE uses the provided second Shared-channel-related configuration for performing transmission on PUSCH and/or reception on PDSCH during the subsequent transmission(s) in the second SDT procedure (e.g. alternative 3).

For a fifth example, if the network provides a first Shared-channel-related configuration in the RRCRelease message which transits the UE from RRC_CONNECTED state to RRC_INACTIVE sate and the network does not provide a second Shared-channel-related configuration in the first DL transmission (e.g. Msg4 or MsgB) of a SDT procedure, the UE uses the provided first Shared-channel-related configuration for performing transmission on PUSCH and/or reception on PDSCH during the subsequent transmission(s) in the SDT procedure (e.g. alternative 5). If the network provides a first Shared-channel-related configuration in the RRCRelease message which transits the UE from RRC_CONNECTED state to RRC_INACTIVE sate and the network also provides a second Shared-channel-related configuration in the first DL transmission (e.g. Msg4 or MsgB) of a SDT procedure, the UE uses the provided second Shared-channel-related configuration for performing transmission on PUSCH and/or reception on PDSCH during the subsequent transmission(s) in the SDT procedure (e.g. alternative 3).

For a sixth example, if the network provides (or indicates) a first Shared-channel-related configuration in System Information to be used for the subsequent transmission(s), and the network does not provide a second Shared-channel-related configuration in the RRCRelease message transmitted before the UE initiates a SDT procedure, the UE uses the first Shared-channel-related configuration for performing transmission on PUSCH and/or reception on PDSCH during the subsequent transmission(s) in the SDT procedure (e.g. alternative 2). If the network provides (or indicates) a first Shared-channel-related configuration in System Information to be used for the subsequent transmission(s), and the network also provides a second Shared-channel-related configuration in the RRCRelease message transmitted before the UE initiates a SDT procedure, the UE uses the second Shared-channel-related configuration for performing transmission on PUSCH and/or reception on PDSCH during the subsequent transmission(s) in the SDT procedure (e.g. alternative 3 or alternative 5).

During the RRC Resume procedure (e.g. a RA procedure) on a Cell, each time before performing the Msg1/MsgA transmission, the UE selects a beam (or SSB). The UE uses the selected beam for transmission and/or reception until e.g. successful completion of the RA procedure. In case there is subsequent transmission(s) in a RACH based SDT procedure, the network may decide to change the beam (or the TCI state) used by the UE for performing transmission and/or reception during the subsequent transmission(s). Some assistance information may be required for the network to determine which beam (or the TCI state) is to be used by the UE. For example, the UE may be requested to perform CSI measurement and/or CSI reporting, so that the network could choose a better beam (or the TCI state) to be used for the UE when needed.

For example, the UE could perform Channel State Information (CSI) measurement during the RA procedure for SDT. For example, the UE could perform CSI measurement during the subsequent transmission(s) in the SDT procedure. For example, the UE could perform CSI reporting during the RA procedure for SDT. For example, the UE could perform CSI reporting during the subsequent transmission(s) in the SDT procedure. The CSI reporting could be periodic. The CSI reporting could be aperiodic (e.g. triggered using CSI request in DCI format 0_1). The CSI reporting could be semi-persistent.

Since the UE is not able to perform CSI measurement and/or CSI reporting without corresponding configuration (referred to as "CSI-measurement/reporting-related configuration"), how the UE acquires the CSI-measurement/reporting-related configuration to be used in SDT needs to be specified. The CSI-measurement/reporting-related configuration could comprise CSI measurement configuration (e.g. *CSI-MeasConfig*). The CSI-measurement/reporting-related configuration could comprise CSI reporting configuration (e.g. *CSI-ReportConfig*). The CSI-measurement/reporting-related configuration could comprise Physical Uplink Control Channel (PUCCH) configuration (e.g. *PUCCH-Config*).

For the RACH based SDT procedure, the UE could performing CSI measurement and/or CSI reporting (during the SDT procedure) based on at least one of the following alternatives:

1. *The CSI-measurement/reporting-related configuration used for the RACH based SDT procedure is provided in the first DL transmission (e.g. Msg4 or MsgB) of the SDT procedure*

The network could directly provide the CSI-measurement/reporting-related configuration in the first DL transmission of the SDT procedure to the UE. In response to receiving the CSI-measurement/reporting-related configuration in the first DL transmission of the SDT procedure, the UE could performing CSI measurement and/or CSI reporting during the subsequent transmission(s) in the SDT procedure, based on the received CSI-measurement/reporting-related configuration.

For example, the network provides a CSI measurement configuration in the first DL transmission of a SDT procedure. The UE uses the CSI measurement configuration for performing CSI measurement during the subsequent transmission(s) in the SDT procedure. For example, the network provides a CSI reporting configuration in the first DL transmission of a SDT procedure. The UE uses the CSI reporting configuration for performing CSI reporting during the subsequent transmission(s) in the SDT procedure.

The CSI-measurement/reporting-related configuration provided in a first SDT procedure could be used for a second SDT procedure initiated after the first SDT procedure has been completed. For example, while the UE is in RRC_INACTIVE state, the network could transmit a RRCRelease message with *suspendConfig* to complete a first SDT procedure initiated by the UE. The network could provide the CSI-measurement/reporting-related configuration in the RRCRelease message, so that later when the UE initiates a second SDT procedure, the UE could use the previously provided CSI-measurement/reporting-related configuration for performing CSI measurement and/or CSI reporting during the subsequent transmission(s) in the second SDT procedure and/or during the RA procedure for the second SDT procedure.

The CSI-measurement/reporting-related configuration in the first DL transmission could be included in a RRC message (e.g. RRCRelease message).

*2. The CSI-measurement/reporting-related configuration used for the RACH based SDT procedure is the one which was used by the UE in previous RRC CONNECTED state*

Upon entering RRC_INACTIVE state from RRC_CONNECTED state, the UE will store (part of) its current RRC configuration in the UE Inactive AS context. The UE Inactive AS context also contains the CSI-measurement/reporting-related configuration. The UE could restore the CSI-measurement/reporting-related configuration from the UE Inactive AS context, for performing CSI measurement and/or CSI reporting during the subsequent transmission(s) in a SDT procedure and/or during the RA procedure for the SDT procedure.

For example, in response to initiating a SDT procedure, the UE restores the CSI measurement configuration from the UE Inactive AS context, and use the restored CSI measurement configuration for performing CSI measurement during the RA procedure for the SDT procedure and/or during the subsequent transmission(s) in the SDT procedure. For example, in response to initiating a SDT procedure, the UE restores the CSI reporting configuration from the UE Inactive AS context, and use the restored CSI reporting configuration for performing CSI reporting during the RA procedure for the SDT procedure and/or during the subsequent transmission(s) in the SDT procedure.

For example, in response to receiving an indication from the network indicating that there is subsequent transmission(s) in a SDT procedure, the UE restores the CSI measurement configuration from the UE Inactive AS context, and use the restored CSI measurement configuration for performing CSI measurement during the subsequent transmission(s). For example, in response to receiving an indication from the network indicating that there is subsequent transmission(s) in a SDT procedure, the UE restores the CSI reporting configuration from the UE Inactive AS context, and use the restored CSI reporting configuration for performing CSI reporting during the subsequent transmission(s).

The UE could restore the CSI-measurement/reporting-related configuration of its SpCell (e.g. the PCell in previous RRC connection).

*3. The CSI-measurement/reporting-related configuration used for the RACH based SDT procedure is provided in the RRCRelease message which transits the UEfrom RRC CONNECTED state to RRC_INACTIVE state*

Before the UE enters RRC_INACTIVE state, the network could provide the CSI-measurement/reporting-related configuration to be used for the RACH based SDT procedure initiated by the UE later. In response to receiving the CSI-measurement/reporting-related configuration in the RRCRelease message received in RRC_CONNECTED state triggering state transition, the UE could store the received CSI-measurement/reporting-related configuration in the UE Inactive AS context. The received CSI-measurement/reporting-related configuration could be different from the CSI-measurement/reporting-related configuration(s) which was used by the UE in RRC_CONNECTED state. In other words, the UE could store (at least) two CSI-measurement/reporting-related configurations in the UE Inactive AS context, wherein one is used while the UE is in RRC_CONNECTED state, and the other one is received in the RRCRelease message triggering state transition to RRC_INACTIVE. In response to initiation of a SDT procedure or in response to receiving an indication from the network indicating that there is subsequent transmission(s) in the SDT procedure, the UE could restore the CSI-measurement/reporting-related configuration (to be used for the RACH based SDT procedure) from the UE Inactive AS context.

For example, while the UE is in RRC_CONNECTED state, the network transmits a RRCRelease message with *suspendConfig* to transit the UE into RRC_INACTIVE state. The network could provide the CSI-measurement/reporting-related configuration (to be used for the RACH based SDT procedure) in the RRCRelease message, so that later when the UE initiates a SDT procedure, the UE could use the previously provided CSI-measurement/reporting-related configuration received in the RRCRelease message for performing CSI measurement and/or CSI reporting during the RA procedure for the SDT procedure and/or during the subsequent transmission(s) in the SDT procedure.

Combinations of the above alternatives are possible.

For a first example, if the network provides CSI-measurement/reporting-related configuration in the first DL transmission (e.g. Msg4 or MsgB) of a SDT procedure, the UE uses the provided CSI-measurement/reporting-related configuration for performing CSI measurement and/or CSI reporting during the subsequent transmission(s) in the SDT procedure (e.g. alternative 1). If the network does not provide CSI-measurement/reporting-related configuration in the first DL transmission (e.g. Msg4 or MsgB) of a SDT procedure, the UE restores the CSI-measurement/reporting-related configuration from the UE Inactive AS context, for performing CSI measurement and/or CSI reporting during the subsequent transmission(s) in the SDT procedure (e.g. alternative 2).

For a second example, if the network provides a first CSI-measurement/reporting-related configuration in the RRCRelease message transmitted in a first SDT procedure and the network does not provide a second CSI-measurement/reporting-related configuration in the first DL transmission (e.g. Msg4 or MsgB) of a second SDT procedure initiated by the UE after the first SDT procedure has been completed, the UE uses the provided first CSI-measurement/reporting-related configuration for performing CSI measurement and/or CSI reporting during the subsequent transmission(s) in the second SDT procedure (e.g. alternative 1). If the network provides a first CSI-measurement/reporting-related configuration in the RRCRelease message transmitted in a first SDT procedure and the network also provides a second CSI-measurement/reporting-related configuration in the first DL transmission (e.g. Msg4 or MsgB) of a second SDT procedure initiated by the UE after the first SDT procedure has been completed, the UE uses the provided second CSI-measurement/reporting-related configuration for performing CSI measurement and/or CSI reporting during the subsequent transmission(s) in the second SDT procedure (e.g. alternative 1).

For a third example, if the network provides a first CSI-measurement/reporting-related configuration in the RRCRelease message which transits the UE from RRC_CONNECTED state to RRC_INACTIVE sate and the network does not provide a second CSI-measurement/reporting-related configuration in the first DL transmission (e.g. Msg4 or MsgB) of a SDT procedure, the UE uses the provided first CSI-measurement/reporting-related configuration for performing CSI measurement and/or CSI reporting during the subsequent transmission(s) in the SDT procedure (e.g. alternative 3). If the network provides a first CSI-measurement/reporting-related configuration in the RRCRelease message which transits the UE from RRC_CONNECTED state to RRC_INACTIVE sate and the network also provides a second CSI-measurement/reporting-related configuration in the first DL transmission (e.g. Msg4 or MsgB) of a SDT procedure, the UE uses the provided second CSI-measurement/reporting-related configuration for performing CSI measurement and/or CSI reporting during the subsequent transmission(s) in the SDT procedure (e.g. alternative 1).

During the RRC Resume procedure (e.g. a RA procedure) on a Cell, each time before performing the Msg1/MsgA transmission, the UE selects a beam (or SSB). The UE uses the selected beam for transmission and/or reception until (e.g. successful completion of the RA procedure). From the network's perspective, after the network successfully detects and receives UL transmissions from the UE, the network may use a beam for following transmissions and/or receptions to/from the UE during the RA procedure.

In case there is subsequent transmission(s) in a RACH based SDT procedure, the network may decide to change the beam used by the network for performing transmission (to the UE) and/or reception (from the UE) during the subsequent transmission(s). Some assistance information may be required for the network to determine which beam is to be used by the network. For example, the UE may be requested to perform Sounding Reference Signal (SRS) transmissions, so that the network could choose a better beam to use when needed. The SRS transmissions could be periodic. The SRS transmissions could be aperiodic (e.g. triggered using SRS request in DCI format 0_1 or DCI format 1_1). The SRS transmissions could be semi-persistent.

Since the UE is not able to perform SRS transmissions without corresponding configuration (referred to as "SRS-related configuration"), how the UE acquires the SRS-related configuration to be used in SDT needs to be specified. The SRS-related configuration could comprise SRS configuration (e.g. *SRS-Config*).

For the RACH based SDT procedure, the UE could perform SRS transmissions (during the SDT procedure) based on at least one of the following alternatives:

1. *The SRS-related configuration used for the RACH based SDT procedure is provided in the first DL transmission (e.g. Msg4 or MsgB) of the SDT procedure*

The network could directly provide the SRS-related configuration in the first DL transmission of the SDT procedure to the UE. In response to receiving the SRS-related configuration in the first DL transmission of the SDT procedure, the UE could perform SRS transmissions during the subsequent transmission(s) in the SDT procedure, based on the received SRS-related configuration.

For example, the network provides a SRS configuration in the first DL transmission of a SDT procedure. The UE uses the SRS configuration for performing SRS transmissions during the subsequent transmission(s) in the SDT procedure.

The SRS-related configuration provided in a first SDT procedure could be used for a second SDT procedure initiated after the first SDT procedure has been completed. For example, while the UE is in RRC_INACTIVE state, the network could transmit a RRCRelease message with *suspendConfig* to complete a first SDT procedure initiated by the UE. The network could provide the SRS-related configuration in the RRCRelease message, so that later when the UE initiates a second SDT procedure, the UE could use the previously provided SRS-related configuration for performing SRS transmissions during the subsequent transmission(s) in the second SDT procedure.

The SRS-related configuration in the first DL transmission could be included in a RRC message (e.g. RRCRelease message).

*2. The SRS-related configuration used for the RACH based SDT procedure is the one which was used by the UE in previous RRC CONNECTED state*

Upon entering RRC_INACTIVE state from RRC_CONNECTED state, the UE will store (part of) its current RRC configuration in the UE Inactive AS context. The UE Inactive AS context also contains the SRS-related configuration. The UE could restore the SRS-related configuration from the UE Inactive AS context, for performing SRS transmissions during the subsequent transmission(s).

For example, in response to receiving an indication from the network indicating that there is subsequent transmission(s) in a SDT procedure, the UE restores the SRS configuration from the UE Inactive AS context, and use the restored SRS configuration for performing SRS transmissions during the subsequent transmission(s).

The UE could restore the SRS-related configuration of its SpCell (e.g. the PCell in previous RRC connection). In case there is multiple UL BWPs (under the SpCell) in the UE Inactive AS context, the UE could restore the SRS-related configuration under the initial UL BWP. Additionally or alternatively, the network could indicate (e.g. in Msg4 or MsgB) which UL BWP among the multiple UL BWPs the UE restores the SRS-related configuration. For example, if the network does not indicate which UL BWP among the multiple UL BWPs the UE restores the SRS-related configuration, the UE restores the SRS-related configuration under the initial UL BWP. If the network indicates (e.g. in Msg4 or MsgB) which UL BWP among the multiple UL BWPs the UE restores the SRS-related configuration, the UE restores the SRS-related configuration under the UL BWP indicated by the network.

*3. The SRS-related configuration used for the RACH based SDT procedure is provided in the RRCRelease message which transits the UE from RRC CONNECTED state to RRC INACTIVE state*

Before the UE enters RRC_INACTIVE state, the network could provide the SRS-related configuration to be used for the subsequent transmission(s) in a SDT procedure initiated by the UE later. In response to receiving the SRS-related configuration in the RRCRelease message received in RRC_CONNECTED state triggering state transition, the UE could store the received SRS-related configuration in the UE Inactive AS context. The received SRS-related configuration could be different from the SRS-related configuration(s) which was used by the UE in RRC_CONNECTED state. In other words, the UE could store (at least) two SRS-related configurations in the UE Inactive AS context, wherein one is used while the UE is in RRC_CONNECTED state, and the other one is received in the RRCRelease message triggering state transition to RRC_INACTIVE. In response to initiation of a SDT procedure or in response to receiving an indication from the network indicating that there is subsequent transmission(s) in the SDT procedure, the UE could restore the SRS-related configuration (to be used for the subsequent transmission(s)) from the UE Inactive AS context.

For example, while the UE is in RRC_CONNECTED state, the network transmits a RRCRelease message with *suspendConfig* to transit the UE into RRC_INACTIVE state. The network could provide the SRS-related configuration (to be used for the subsequent transmission(s)) in the RRCRelease message, so that later when the UE initiates a SDT procedure, the UE could use the previously provided SRS-related configuration received in the RRCRelease message for performing SRS transmissions during the subsequent transmission(s) in the SDT procedure.

Combinations of the above alternatives are possible.

For a first example, if the network provides SRS-related configuration in the first DL transmission (e.g. Msg4 or MsgB) of a SDT procedure, the UE uses the provided SRS-related configuration for performing SRS transmissions during the subsequent transmission(s) in the SDT procedure (e.g. alternative 1). If the network does not provide SRS-related configuration in the first DL transmission (e.g. Msg4 or MsgB) of a SDT procedure, the UE restores the SRS-related configuration from the UE Inactive AS context, for performing SRS transmissions during the subsequent transmission(s) in the SDT procedure (e.g. alternative 2).

For a second example, if the network provides a first SRS-related configuration in the RRCRelease message transmitted in a first SDT procedure and the network does not provide a second SRS-related configuration in the first DL transmission (e.g. Msg4 or MsgB) of a second SDT procedure initiated by the UE after the first SDT procedure has been completed, the UE uses the provided first SRS-related configuration for performing SRS transmissions during the subsequent transmission(s) in the second SDT procedure (e.g. alternative 3). If the network provides a first SRS-related configuration in the RRCRelease message transmitted in a first SDT procedure and the network also provides a second SRS-related configuration in the first DL transmission (e.g. Msg4 or MsgB) of a second SDT procedure initiated by the UE after the first SDT procedure has been completed, the UE uses the provided second SRS-related configuration for performing SRS transmissions during the subsequent transmission(s) in the second SDT procedure (e.g. alternative 3).

For a third example, if the network provides a first SRS-related configuration in the RRCRelease message which transits the UE from RRC_CONNECTED state to RRC_INACTIVE sate and the network does not provide a second SRS-related configuration in the first DL transmission (e.g. Msg4 or MsgB) of a SDT procedure, the UE uses the provided first SRS-related configuration for performing SRS transmissions during the subsequent transmission(s) in the SDT procedure (e.g. alternative 3). If the network provides a first SRS-related configuration in the RRCRelease message which transits the UE from RRC_CONNECTED state to RRC_INACTIVE sate and the network also provides a second SRS-related configuration in the first DL transmission (e.g. Msg4 or MsgB) of a SDT procedure, the UE uses the provided second SRS-related configuration for performing SRS transmissions during the subsequent transmission(s) in the SDT procedure (e.g. alternative 1).

The subsequent transmission(s) as described in above alternatives could be a time period in which subsequent UL/DL transmission may take place. The subsequent transmission(s) as described in above alternatives could be a time period in which the UE may perform UL transmission or DL reception.

The above implementations could be applicable for (and/or supported by) Reduced Capability NR Device (or namely NR_Light device). The above implementations could be applicable for (and/or supported by) normal NR Device.

The UE may initiate the small data transmission procedure on a Serving Cell other than the last (Primary) Serving Cell in RRC_CONNECTED state. The UE may initiate the small data transmission procedure on the same Serving Cell as the last (Primary) Serving Cell in RRC_CONNECTED state.

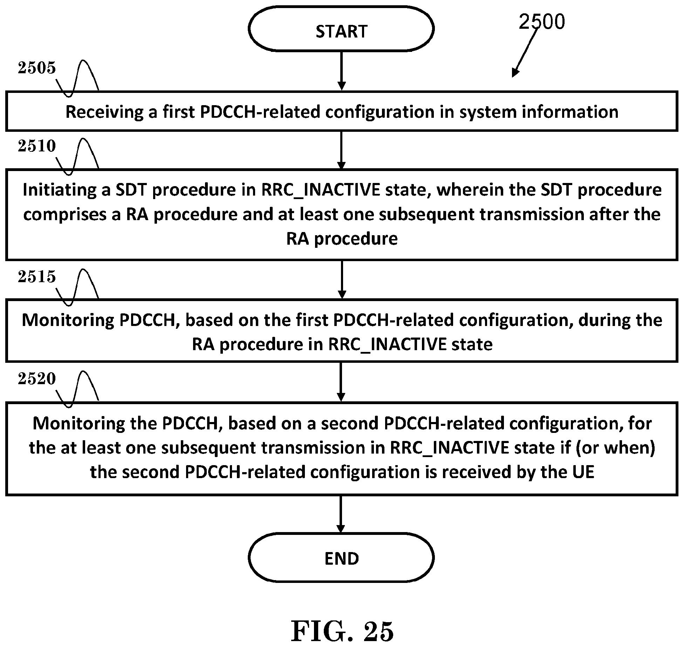

FIG. 25 is a flow chart 2500 according to one exemplary embodiment from the perspective of a UE. In step 2505, the UE receive a first PDCCH-related configuration in system information. In step 2510, the UE initiates a Small Data Transmission (SDT) procedure in RRC_INACTIVE state, wherein the SDT procedure comprises a Random Access (RA) procedure and at least one subsequent transmission after the RA procedure. In step 2515, the UE monitors PDCCH, based on the first PDCCH-related configuration, during the RA procedure in RRC_INACTIVE state. In step 2520, the UE monitors the PDCCH, based on a second PDCCH-related configuration, for the at least one subsequent transmission in RRC _INACTIVE state if (or when) the second PDCCH-related configuration is received by the UE.

Preferably, the UE could monitor the PDCCH, based on the first PDCCH-related configuration, for the at least one subsequent transmission if (or when) the second PDCCH-related configuration is not received by the UE. Furthermore, the UE could receive the second PDCCH-related configuration in the system information, a Msg4, a MSGB, or a RRCRelease message.

Preferably, the first PDCCH-related configuration and/or the second PDCCH-related configuration may include at least one of a search space configuration or a Control Resource Set (CORESET) configuration. The search space configuration may be associated with a common search space.

Preferably, the system information may include a third PDCCH-related configuration for monitoring the PDCCH during a RA procedure not for SDT. The at least one subsequent transmission could be for Uplink (UL) and could be scheduled through dynamic uplink grant. In addition, the SDT procedure could be a RRC connection resume procedure.

Referring back to FIGS. 3 and 4, in one exemplary embodiment of a UE, the UE 300 includes a program code 312 stored in the memory 310. The CPU 308 could execute program code 312 to enable the UE (i) to receive a first PDCCH-related configuration in system information, (ii) to initiate a SDT procedure in RRC_INACTIVE state, wherein the SDT procedure comprises a RA procedure and at least one subsequent transmission after the RA procedure, (iii) to monitor PDCCH, based on the first PDCCH-related configuration, during the RA procedure in RRC_INACTIVE state, and (iv) to monitor the PDCCH, based on a second PDCCH-related configuration, for the at least one subsequent transmission in RRC_INACTIVE state if (or when) the second PDCCH-related configuration is received by the UE. Furthermore, the CPU 308 can execute the program code 312 to perform all of the above-described actions and steps or others described herein.

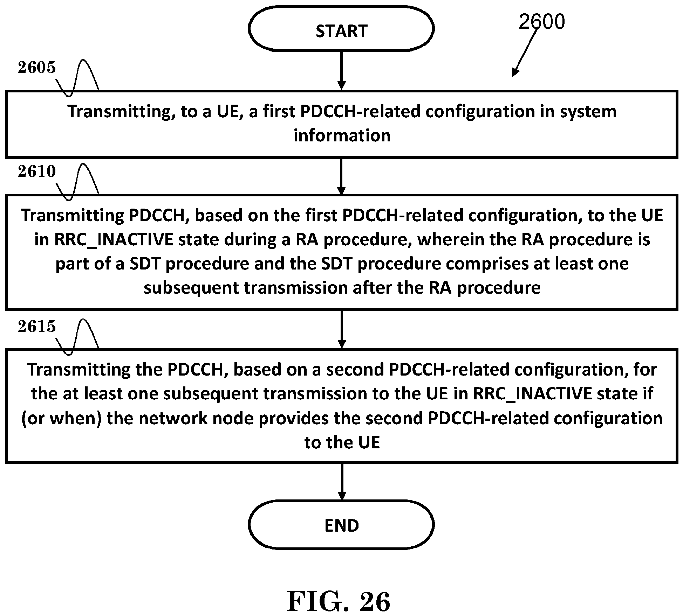

FIG. 26 is a flow chart 2600 according to one exemplary embodiment from the perspective of a network node. In step 2605, the network node transmits, to a UE, a first PDCCH-related configuration in system information. In step 2610, the network node transmits PDCCH, based on the first PDCCH-related configuration, to the UE in RRC_INACTIVE state during a RA procedure, wherein the RA procedure is part of a SDT procedure and the SDT procedure comprises at least one subsequent transmission after the RA procedure. In step 2615, the network node transmits the PDCCH, based on a second PDCCH-related configuration, for the at least one subsequent transmission to the UE in RRC_INACTIVE state if (or when) the network node provides the second PDCCH-related configuration to the UE.

Preferably, the network node could transmit the PDCCH, based on the first PDCCH-related configuration, for the at least one subsequent transmission if (or when) the network node does not provide the second PDCCH-related configuration to the UE. Furthermore, the network node could provide the second PDCCH-related configuration in the system information, a Msg4, a MSGB, or a RRCRelease message.

Preferably, the first PDCCH-related configuration and/or the second PDCCH-related configuration may include at least one of a search space configuration or a CORESET configuration. The system information may include a third PDCCH-related configuration for monitoring the PDCCH during a RA procedure not for SDT.

Referring back to FIGS. 3 and 4, in one exemplary embodiment of a network node, the network node 300 includes a program code 312 stored in the memory 310. The CPU 308 could execute program code 312 to enable the network node (i) to transmit, to a UE, a first PDCCH-related configuration in system information, (ii) to transmit PDCCH, based on the first PDCCH-related configuration, to the UE in RRC_INACTIVE state during a RA procedure, wherein the RA procedure is part of a SDT procedure and the SDT procedure comprises at least one subsequent transmission after the RA procedure, and (iii) to transmit the PDCCH, based on a second PDCCH-related configuration, for the at least one subsequent transmission to the UE in RRC_INACTIVE state if (or when) the network node provides the second PDCCH-related configuration to the UE. Furthermore, the CPU 308 can execute the program code 312 to perform all of the above-described actions and steps or others described herein.

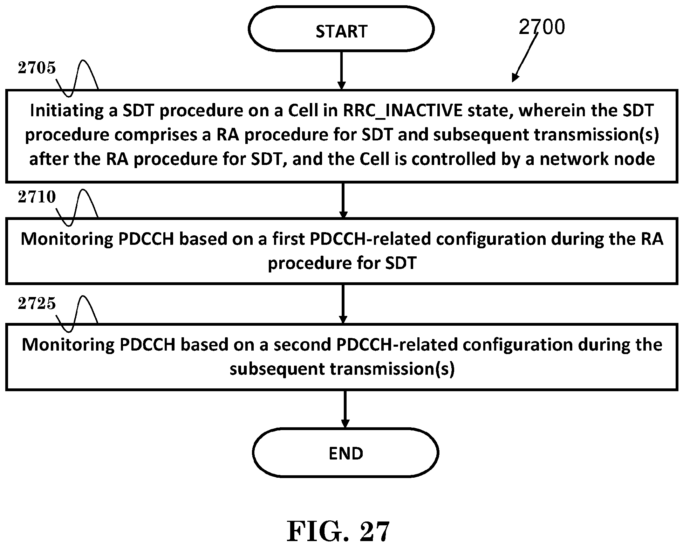

FIG. 27 is a flow chart 2700 according to one exemplary embodiment from the perspective of a UE. In step 2705, the UE initiates a SDT procedure on a Cell in RRC_INACTIVE state, wherein the SDT procedure comprises a RA procedure for SDT and subsequent transmission(s) after the RA procedure for SDT, and the Cell is controlled by a network node. In step 2710, the UE monitors PDCCH based on a first PDCCH-related configuration during the RA procedure for SDT. In step 2715, the UE monitors PDCCH based on a second PDCCH-related configuration during the subsequent transmission(s).

Preferably, the UE may acquire the first PDCCH-related configuration from a first System Information of the Cell. The first System Information of the Cell may be System Information Block Type 1 (SIB1).

Preferably, before the monitoring PDCCH based on the second PDCCH-related configuration, the UE could acquire the second PDCCH-related configuration from a second System Information of the Cell. The second PDCCH-related configuration may be the same as the first PDCCH-related configuration. Alternatively, the second PDCCH-related configuration may be different from the first PDCCH-related configuration. The second System Information of the Cell may be System Information Block Type 1 (SIB1). Alternatively, the second System Information of the Cell may be a System Information Block other than System Information Block Type 1 (SIB1).

Preferably, before the monitoring PDCCH based on the second PDCCH-related configuration, the UE may receive, from the network node, the second PDCCH-related configuration in a downlink message during the RA procedure for SDT. The UE may consider the RA procedure for SDT completed in response to receiving the downlink message during the RA procedure for SDT.

Preferably, before the monitoring PDCCH based on the second PDCCH-related configuration, the UE may restore the second PDCCH-related configuration from a UE Inactive AS context. The UE could use the second PDCCH-related configuration for monitoring PDCCH while the UE was in RRC_CONNECTED state. The UE could store RRC configurations in the UE Inactive AS context upon state transition from RRC_CONNECTED state to RRC_INACTIVE state, wherein the RRC configurations comprise the second PDCCH-related configuration.

Preferably, before the monitoring PDCCH based on the second PDCCH-related configuration, the UE may receive, from the network node, a *RRCRelease* message triggering state transition of the UE from RRC_CONNECTED state to RRC_INACTIVE state, wherein the *RRCRelease* message comprises the second PDCCH-related configuration.

Preferably, the first PDCCH-related configuration may be a Control Resource Set (CORESET) configuration, a search space configuration, or a TCI states configuration for PDCCH, a CORESET configuration. The second PDCCH-related configuration may be a search space configuration or a TCI states configuration for PDCCH.

Preferably, the subsequent transmission(s) may comprise at least one UL transmission from the UE to the Cell. The subsequent transmission(s) may also comprise at least one DL transmission from the Cell to the UE. The subsequent transmission(s) could be scheduled by the network through dynamic uplink grant or dynamic downlink assignment. The subsequent transmission(s) could also be scheduled by the network through configured uplink grant or configured downlink assignment.

Referring back to FIGS. 3 and 4, in one exemplary embodiment of a UE, the UE 300 includes a program code 312 stored in the memory 310. The CPU 308 could execute program code 312 to enable the UE (i) to initiate a SDT procedure on a Cell in RRC_INACTIVE state, wherein the SDT procedure comprises a RA procedure for SDT and subsequent transmission(s) after the RA procedure for SDT, and the Cell is controlled by a network node, (ii) to monitoring PDCCH based on a first PDCCH-related configuration during the RA procedure for SDT, and (iii) to monitor PDCCH based on a second PDCCH-related configuration during the subsequent transmission(s). Furthermore, the CPU 308 can execute the program code 312 to perform all of the above-described actions and steps or others described herein.

Various aspects of the disclosure have been described above. It should be apparent that the teachings herein could be embodied in a wide variety of forms and that any specific structure, function, or both being disclosed herein is merely representative. Based on the teachings herein one skilled in the art should appreciate that an aspect disclosed herein could be implemented independently of any other aspects and that two or more of these aspects could be combined in various ways. For example, an apparatus could be implemented or a method could be practiced using any number of the aspects set forth herein. In addition, such an apparatus could be implemented or such a method could be practiced using other structure, functionality, or structure and functionality in addition to or other than one or more of the aspects set forth herein. As an example of some of the above concepts, in some aspects concurrent channels could be established based on pulse repetition frequencies. In some aspects concurrent channels could be established based on pulse position or offsets. In some aspects concurrent channels could be established based on time hopping sequences. In some aspects concurrent channels could be established based on pulse repetition frequencies, pulse positions or offsets, and time hopping sequences.

Those of skill in the art would understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Those of skill would further appreciate that the various illustrative logical blocks, modules, processors, means, circuits, and algorithm steps described in connection with the aspects disclosed herein may be implemented as electronic hardware (e.g., a digital implementation, an analog implementation, or a combination of the two, which may be designed using source coding or some other technique), various forms of program or design code incorporating instructions (which may be referred to herein, for convenience, as "software" or a "software module"), or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure.

In addition, the various illustrative logical blocks, modules, and circuits described in connection with the aspects disclosed herein may be implemented within or performed by an integrated circuit ("IC"), an access terminal, or an access point. The IC may comprise a general purpose processor, a digital signal processor (DSP), an application specific integrated circuit (ASIC), a field programmable gate array (FPGA) or other programmable logic device, discrete gate or transistor logic, discrete hardware components, electrical components, optical components, mechanical components, or any combination thereof designed to perform the functions described herein, and may execute codes or instructions that reside within the IC, outside of the IC, or both. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

It is understood that any specific order or hierarchy of steps in any disclosed process is an example of a sample approach. Based upon design preferences, it is understood that the specific order or hierarchy of steps in the processes may be rearranged while remaining within the scope of the present disclosure. The accompanying method claims present elements of the various steps in a sample order, and are not meant to be limited to the specific order or hierarchy presented.

The steps of a method or algorithm described in connection with the aspects disclosed herein may be embodied directly in hardware, in a software module executed by a processor, or in a combination of the two. A software module (e.g., including executable instructions and related data) and other data may reside in a data memory such as RAM memory, flash memory, ROM memory, EPROM memory, EEPROM memory, registers, a hard disk, a removable disk, a CD-ROM, or any other form of computer-readable storage medium known in the art. A sample storage medium may be coupled to a machine such as, for example, a computer/processor (which may be referred to herein, for convenience, as a "processor") such the processor can read information (e.g., code) from and write information to the storage medium. A sample storage medium may be integral to the processor. The processor and the storage medium may reside in an ASIC. The ASIC may reside in user equipment. In the alternative, the processor and the storage medium may reside as discrete components in user equipment. Moreover, in some aspects any suitable computer-program product may comprise a computer-readable medium comprising codes relating to one or more of the aspects of the disclosure. In some aspects a computer program product may comprise packaging materials.

## Claims

1. A method for a User Equipment, in the following also referred to as LTE, comprising:

   receiving a first Physical Downlink Control Channel, in the following also referred to as PDCCH, -related configuration in system information (2505), wherein the first PDCCH-related configuration includes at least one of a first search space configuration or a first Control Resource Set, in the following also referred to as CORESET, configuration;
   initiating a Small Data Transmission, in the following also referred to as SDT, procedure in RRC_INACTIVE state, wherein the SDT procedure comprises a Random Access, in the following also referred to as RA, procedure and at least one subsequent transmission after the RA procedure (2510); and

monitoring PDCCH, based on the first PDCCH-related configuration, during the RA procedure in RRC_INACTIVE state (2515);

**characterized by**

monitoring the PDCCH, based on a second PDCCH-related configuration, for the at least one subsequent transmission in RRC_INACTIVE state if the second PDCCH-related configuration is received by the UE in the system information, a Msg4, a MSGB, or a RRCRelease message (2520), wherein the second PDCCH-related configuration includes at least one of a second search space configuration or a second CORESET configuration; and

monitoring the PDCCH, based on the first PDCCH-related configuration, for the at least one subsequent transmission if the second PDCCH-related configuration is not received by the UE in the system information, the Msg4, the MSGB, or the RRCRelease message.

2. The method of claim 1, wherein the second search space configuration is associated with a common search space.

3. The method of claim 1 or 2, wherein the system information includes a third PDCCH-related configuration for monitoring the PDCCH during a RA procedure not for SDT.

4. The method of any one of claims 1 to 3, wherein the at least one subsequent transmission is for Uplink, in the following also referred to as LTL, and is scheduled through dynamic uplink grant.

5. The method of any one of claims 1 to 4, wherein the SDT procedure is a Radio Resource Control, in the following also referred to as RRC, connection resume procedure.

6. The method of any one of claims 1 to 5, wherein the system information is SIB1.

7. A method for a network node, comprising:

transmitting, to a User Equipment, in the following also referred to as LTE, a first Physical Downlink Control Channel, in the following also referred to as PDCCH, -related configuration in system information (2605) , wherein the first PDCCH-related configuration includes at least one of a first search space configuration or a first Control Resource Set, in the following also referred to as CORESET, configuration; and

transmitting PDCCH, based on the first PDCCH-related configuration, to the UE in RRC_INACTIVE state during a Random Access, in the following also referred to as RA, procedure, wherein the RA procedure is part of a Small Data Transmission, in the following also referred to as SDT, procedure and the SDT procedure comprises at least one subsequent transmission after the RA procedure (2610);

**characterized by**

transmitting the PDCCH, based on a second PDCCH-related configuration, for the at least one subsequent transmission to the UE in RRC_INACTIVE state if the network node provides the second PDCCH-related configuration in the system information, a Msg4, a MSGB, or a RRCRelease message to the UE (2615), wherein the second PDCCH-related configuration includes at least one of a second search space configuration or a second CORESET configuration; and

transmitting the PDCCH, based on the first PDCCH-related configuration, for the at least one subsequent transmission if the network node does not provide the second PDCCH-related configuration in the system information, the Msg4, the MSGB, or the RRCRelease message to the UE.

8. The method of claim 7, wherein the system information includes a third PDCCH-related configuration for monitoring the PDCCH during a RA procedure not for SDT.

9. The method of claim 7 or 8, wherein the second search space configuration is associated with a common search space.

10. The method of any one claims 7 to 9, wherein the at least one subsequent transmission is for Uplink, in the following also referred to as LTL, and is scheduled through dynamic uplink grant.

11. The method of any one of claims 7 to 10, wherein the SDT procedure is a Radio Resource Control, in the following also referred to as RRC, connection resume procedure.

**12.** The method of any one of claims 7 to 11, wherein the system information is SIB1.

**13.** A User Equipment, in the following also referred to as UE, comprising:

a control circuit (306);
a processor (308) installed in the control circuit (306); and
a memory (310) installed in the control circuit (306) and operatively coupled to the processor (308);
wherein the processor (308) is configured to execute a program code (310) stored in the memory (312) to perform the method steps as defined in any one of claims 1 to 6.

**14.** A network node, comprising:

a control circuit (306);
a processor (308) installed in the control circuit (306); and
a memory (310) installed in the control circuit (306) and operatively coupled to the processor (308);
wherein the processor (308) is configured to execute a program code (310) stored in the memory (312) to perform the method steps as defined in any one of claims 7 to 12.

**Patentansprüche**

**1.** Verfahren für eine Teilnehmerausrüstung, im Folgenden auch als UE bezeichnet, umfassend:

Empfangen einer ersten Physical-Downlink-Control-Channel-, im Folgenden auch als PDCCH bezeichnet, -bezogenen Konfiguration in einer Systeminformation (2505), wobei die erste PDCCH-bezogene Konfiguration mindestens eine von einer ersten Suchraumkonfiguration oder einer ersten Steuerungsressourcensatz-, im Folgenden auch als CORESET bezeichnet, Konfiguration umfasst;
Initiieren einer Small-Data-Transmission-, im Folgenden auch als SDT bezeichnet, Prozedur in einem RRC_INACTIVE-Status, wobei die SDT-Prozedur eine Zufallszugriffs-, im Folgenden auch als RA bezeichnet, Prozedur und mindestens eine anschließende Übertragung nach der RA-Prozedur umfasst (2510); und
Beobachten des PDCCHs basierend auf der ersten PDCCH-basierten Konfiguration während der RA-Prozedur in dem RRC_INACTIVE-Status (2515);
**gekennzeichnet durch**
Beobachten des PDCCHs basierend auf einer zweiten PDCCH-bezogenen Konfiguration für mindestens eine anschließende Übertragung in dem RRC_INACTIVE-Status, wenn die zweite PDCCH-bezogene Konfiguration durch die UE in der Systeminformation, einer Msg4, einer MSGB oder einer RRCRelease-Nachricht empfangen wird (2520), wobei die zweite PDCCH-bezogene Konfiguration mindestens eine von einer zweiten Suchraumkonfiguration oder einer zweiten CORESET-Konfiguration umfasst; und
Beobachten des PDCCHs basierend auf der ersten PDCCH-basierten Konfiguration für mindestens eine anschließende Übertragung, wenn die zweite PDCCH-bezogene Konfiguration nicht durch die UE in der Systeminformation, der Msg4, der MSGB oder der RRCRelease-Nachricht empfangen wird.

**2.** Verfahren gemäß Anspruch 1, wobei die zweite Suchraumkonfiguration mit einem allgemeinen Suchraum verknüpft ist.

**3.** Verfahren gemäß Anspruch 1 oder 2, wobei die Systeminformation eine dritte PDCCH-bezogene Konfiguration zum Beobachten des PDCCHs während einer RA-Prozedur nicht für eine SDT umfasst.

**4.** Verfahren gemäß einem der Ansprüche 1 bis 3, wobei die mindestens eine anschließende Übertragung für einen Uplink, im Folgenden auch als UL bezeichnet, ist und durch eine dynamische Uplink-Bewilligung zeitlich festgelegt ist.

**5.** Verfahren gemäß einem der Ansprüche 1 bis 4, wobei die SDT-Prozedur eine Funkressourcensteuerung-, im Folgenden auch als RRC bezeichnet, Verbindungswiederaufnahmeprozedur ist.

**6.** Verfahren gemäß einem der Ansprüche 1 bis 5, wobei die Systeminformation SIB1 ist.

**7.** Verfahren für einen Netzwerkknoten, umfassend:

Übertragen, an eine Teilnehmerausrüstung, im Folgenden auch als UE bezeichnet, einer ersten Physical-Downlink-Control-Channel-, im Folgenden auch als PDCCH bezeichnet, -bezogenen Konfiguration in einer Systeminformation (2605), wobei die erste PDCCH-bezogene Konfiguration mindestens eine von einer ersten Suchraumkonfiguration oder einer ersten Steuerungsressourcensatz-, im Folgenden auch als CORESET bezeichnet, Konfiguration umfasst; und

Übertragen eines PDCCHs basierend auf der ersten PDCCH-bezogenen Konfiguration an die UE in einem RRC_INACTIVE-Status während einer Zufallszugriffs-, im Folgenden auch als RA bezeichnet, Prozedur, wobei die RA-Prozedur ein Teil einer Small-Data-Transmission-, im Folgenden auch als SDT bezeichnet, Prozedur ist und die SDT-Prozedur mindestens eine anschließende Übertragung nach der RA-Prozedur umfasst (2610);

**gekennzeichnet durch**

Übertragen des PDCCHs basierend auf einer zweiten PDCCH-basierten Konfiguration für die mindestens eine anschließende Übertragung an die UE in dem RRC_INACTIVE-Status, wenn der Netzwerkknoten die zweite PDCCH-bezogene Konfiguration in der Systeminformation, einer Msg4, einer MSGB oder einer RRCRelease-Nachricht an die UE bereitstellt (2615), wobei die zweite PDCCH-bezogene Konfiguration mindestens eine einer zweiten Suchraumkonfiguration oder einer zweiten CORESET-Konfiguration umfasst; und

Übertragen des PDCCHs basierend auf der ersten PDCCH-bezogenen Konfiguration für die mindestens eine anschließende Übertragung, wenn der Netzwerkknoten die zweite PDCCH-bezogene Konfiguration in der Systeminformation, der Msg4, der MSGB oder der RRCRelease-Nachricht nicht an die UE bereitstellt.

8. Verfahren gemäß Anspruch 7, wobei die Systeminformation eine dritte PDCCH-bezogene Konfiguration zum Beobachten des PDCCHs während einer RA-Prozedur nicht für eine SDT umfasst.

9. Verfahren gemäß Anspruch 7 oder 8, wobei die zweite Suchraumkonfiguration mit einem allgemeinen Suchraum verknüpft ist.

10. Verfahren gemäß einem der Ansprüche 7 bis 9, wobei die mindestens eine anschließende Übertragung für einen Uplink, im Folgenden auch als UL bezeichnet, ist und durch eine dynamische Uplink-Bewilligung zeitlich festgelegt ist.

11. Verfahren gemäß einem der Ansprüche 7 bis 10, wobei die SDT-Prozedur eine Funkressourcensteuerung-, im Folgenden auch als RRC bezeichnet, Verbindungswiederaufnahmeprozedur ist.

12. Verfahren gemäß einem der Ansprüche 7 bis 11, wobei die Systeminformation SIB1 ist.

13. Teilnehmerausrüstung, im Folgenden auch als UE bezeichnet, aufweisend:

eine Steuerungsschaltung (306);
einen Prozessor (308), der in der Steuerungsschaltung (306) installiert ist; und
einen Speicher (310), der in der Steuerungsschaltung (306) installiert und betriebsfähig mit dem Prozessor (308) verbunden ist;
wobei der Prozessor (308) eingerichtet ist, einen Programm-Code (310), der in dem Speicher (312) gespeichert ist, auszuführen, um die in einem der Ansprüche 1 bis 6 definierten Verfahrensschritte auszuführen.

14. Netzwerkknoten, aufweisend:

eine Steuerungsschaltung (306);
einen Prozessor (308), der in der Steuerungsschaltung (306) installiert ist; und
einen Speicher (310), der in der Steuerungsschaltung (306) installiert und betriebsfähig mit dem Prozessor (308) verbunden ist;
wobei der Prozessor (308) eingerichtet ist, einen Programm-Code (310), der in dem Speicher (312) gespeichert ist, auszuführen, um die in einem der Ansprüche 7 bis 12 definierten Verfahrensschritte auszuführen.

**Revendications**

1. Procédé pour un Équipement Utilisateur, également appelé ci-après UE, comprenant :

la réception d'une première configuration liée à un Canal de Commande de Liaison Descendante Physique, également appelé ci-après PDCCH, dans des informations système (2505), dans laquelle la première configuration liée au PDCCH comprend au moins l'une d'une première configuration d'espace de recherche ou d'une première configuration d'Ensemble de Ressources de Commande, également appelé ci-après CORESET ;

le lancement d'une procédure de Transmission de Petites Données, également appelée ci-après SDT, dans un état RRC_INACTIVE, dans lequel la procédure SDT comprend une procédure d'Accès Aléatoire, également appelée ci-après RA, et au moins une transmission ultérieure après la procédure RA (2510) ; et

la surveillance du PDCCH, sur la base de la première configuration liée au PDCCH, pendant la procédure RA dans l'état RRC_INACTIVE (2515) ;

**caractérisé par**

la surveillance du PDCCH, sur la base d'une deuxième configuration liée au PDCCH, pour l'au moins une transmission ultérieure dans l'état RRC_INACTIVE si la deuxième configuration liée au PDCCH est reçue par l'UE dans les informations système, un Msg4, un MSGB ou un message RRCRelease (2520), dans laquelle la deuxième configuration liée au PDCCH comprend au moins l'une d'une deuxième configuration d'espace de recherche ou d'une deuxième configuration CORESET ; et

la surveillance du PDCCH, sur la base de la première configuration liée au PDCCH, pour l'au moins une transmission ultérieure si la deuxième configuration liée au PDCCH n'est pas reçue par l'UE dans les informations système, le Msg4, le MSGB ou le message RRCRelease.

2. Procédé de la revendication 1, dans lequel la deuxième configuration d'espace de recherche est associée à un espace de recherche commun.

3. Procédé de la revendication 1 ou 2, dans lequel les informations système comprennent une troisième configuration liée au PDCCH pour surveiller le PDCCH pendant une procédure RA non pour SDT.

4. Procédé de l'une quelconque des revendications 1 à 3, dans lequel l'au moins une transmission ultérieure est pour une Liaison Montante, également appelée ci-après UL, et est planifiée par une attribution de liaison montante dynamique.

5. Procédé de l'une quelconque des revendications 1 à 4, dans lequel la procédure SDT est une procédure de reprise de connexion de Commande de Ressource Radio, également appelée ci-après RRC.

6. Procédé de l'une quelconque des revendications 1 à 5, dans lequel les informations système sont SIB1.

7. Procédé pour un noeud de réseau, comprenant :

la transmission, à un Équipement Utilisateur, également appelé ci-après UE, d'une première configuration liée à un Canal de Commande de Liaison Descendante Physique, également appelé ci-après PDCCH, dans des informations système (2605), dans laquelle la première configuration liée au PDCCH comprend au moins l'une d'une première configuration d'espace de recherche ou d'une première configuration d'Ensemble de Ressources de Commande, également appelé ci-après CORESET ; et

la transmission du PDCCH, sur la base de la première configuration liée au PDCCH, à l'UE dans un état RRC_INACTIVE pendant une procédure d'Accès Aléatoire, également appelé ci-après RA, où la procédure RA fait partie d'une procédure de Transmission de Petites Données, également appelée ci-après SDT, et la procédure SDT comprend au moins une transmission ultérieure après la procédure RA (2610) ;

**caractérisé par**

la transmission du PDCCH, sur la base d'une deuxième configuration liée au PDCCH, pour l'au moins une transmission ultérieure à l'UE dans l'état RRC_INACTIVE si le noeud de réseau fournit à l'UE (2615) la deuxième configuration liée au PDCCH dans les informations système, un Msg4, un MSGB, ou un message RRCRelease, dans laquelle la deuxième configuration liée au PDCCH comprend au moins l'une d'une deuxième configuration d'espace de recherche ou d'une deuxième configuration CORESET ; et

la transmission du PDCCH, sur la base de la première configuration liée au PDCCH, pour l'au moins une transmission ultérieure si le noeud de réseau ne fournit pas à l'UE la deuxième configuration liée au PDCCH dans les informations système, le Msg4, le MSGB ou le message RRCRelease.

8. Procédé de la revendication 7, dans lequel les informations système comprennent une troisième configuration liée au PDCCH pour surveiller le PDCCH pendant une procédure RA non pour SDT.

9. Procédé de la revendication 7 ou 8, dans lequel la deuxième configuration d'espace de recherche est associée à un espace de recherche commun.

**10.** Procédé de l'une quelconque des revendications 7 à 9, dans lequel l'au moins une transmission ultérieure est pour une Liaison Montante, également appelée ci-après UL, et est planifiée par une attribution de liaison montante dynamique.

**11.** Procédé de l'une quelconque des revendications 7 à 10, dans lequel la procédure SDT est une procédure de reprise de connexion de Commande de Ressources Radio, également appelée ci-après RRC.

**12.** Procédé de l'une quelconque des revendications 7 à 11, dans lequel les informations système sont SIB1.

**13.** Équipement Utilisateur, également appelé ci-après UE, comprenant :

un circuit de commande (306) ;
un processeur (308) installé dans le circuit de commande (306) ; et
une mémoire (310) installée dans le circuit de commande (306) et couplée de manière fonctionnelle au processeur (308) ;
dans lequel le processeur (308) est configuré pour exécuter un code de programme (310) stocké dans la mémoire (312) pour effectuer les étapes du procédé telles que définies dans l'une quelconque des revendications 1 à 6.

**14.** Noeud de réseau, comprenant :

un circuit de commande (306) ;
un processeur (308) installé dans le circuit de commande (306) ; et
une mémoire (310) installée dans le circuit de commande (306) et couplée de manière fonctionnelle au processeur (308) ;
dans lequel le processeur (308) est configuré pour exécuter un code de programme (310) stocké dans la mémoire (312) pour effectuer les étapes du procédé telles que définies dans l'une quelconque des revendications 7 à 12.

FIG. 1

**FIG. 2**

_300_

```
┌─────────────────────────────────────────────┐
│   ┌──────────────┐      ┌──────────────┐     │
│   │   INPUT      │      │   OUTPUT     │     │
│   │   DEVICE     │      │   DEVICE     │     │
│   │   302        │      │   304        │     │
│   └──────────────┘      └──────────────┘     │
│          ▲                     ▲             │
│          ▼                     ▼             │
│   ┌─────────────────────────────────────┐   │
│   │      CONTROL CIRCUIT 306             │   │
│   │   ┌─────────────────────────────┐   │   │
│   │   │        CPU 308              │   │   │
│   │   └─────────────────────────────┘   │   │
│   │              ▲                      │   │
│   │              ▼                      │   │
│   │   ┌─────────────────────────────┐   │   │
│   │   │      MEMORY 310             │   │   │
│   │   │  ┌───────────────────────┐  │   │   │
│   │   │  │ PROGRAM CODE 312      │  │   │   │
│   │   │  └───────────────────────┘  │   │   │
│   │   └─────────────────────────────┘   │   │
│   └─────────────────────────────────────┘   │
│                  ▲                           │
│                  ▼                           │
│   ┌─────────────────────────────────────┐   │
│   │      TRANSCEIVER 314                 │   │
│   └─────────────────────────────────────┘   │
└─────────────────────────────────────────────┘
```

# FIG. 3

PROGRAM CODE *312*

APPLICATION LAYER *400*

LAYER 3 *402*

LAYER 2 *404*

LAYER 1 *406*

# FIG. 4

**FIG. 5**

**FIG. 6**

FIG. 7

FIG. 8

**FIG. 9**

**FIG. 10**

FIG. 11

FIG. 12

UE ──── RRCResumeRequest/RRCResumeRequest1 ───▶ Network

UE ◀──── RRCRelease ──── Network

**FIG. 13**

UE ──── RRCResumeRequest/RRCResumeRequest1 ───▶ Network

UE ◀──── RRCRelease with suspend configuration ──── Network

**FIG. 14**

```
UE                                                          Network

       RRCResumeRequest/RRCResumeRequest1

                    RRCReject
```

**FIG. 15**

## FIG. 16

FIG. 17

FIG. 18

FIG. 19

**FIG. 20**

**FIG. 21**

FIG. 22

**EP 3 972 368 B1**

PDCCH monitoring:        ra-SearchSpace                ?

| RA procedure | Subsequent TX |
|---|---|

RA-SDT procedure

# FIG. 23

PDCCH monitoring:        ra-SearchSpace        1) other search space or
                                               2) ra-SearchSpace

| RA procedure | Subsequent TX |
|---|---|

RA-SDT procedure

# FIG. 24

68

2500

```
            ┌─────────────────┐
            │      START      │
            └─────────────────┘
                     │
                     ▼
```

2505

**Receiving a first PDCCH-related configuration in system information**

2510

**Initiating a SDT procedure in RRC_INACTIVE state, wherein the SDT procedure comprises a RA procedure and at least one subsequent transmission after the RA procedure**

2515

**Monitoring PDCCH, based on the first PDCCH-related configuration, during the RA procedure in RRC_INACTIVE state**

2520

**Monitoring the PDCCH, based on a second PDCCH-related configuration, for the at least one subsequent transmission in RRC_INACTIVE state if (or when) the second PDCCH-related configuration is received by the UE**

```
            ┌─────────────────┐
            │       END       │
            └─────────────────┘
```

# FIG. 25

START

2600

2605 Transmitting, to a UE, a first PDCCH-related configuration in system information

2610 Transmitting PDCCH, based on the first PDCCH-related configuration, to the UE in RRC_INACTIVE state during a RA procedure, wherein the RA procedure is part of a SDT procedure and the SDT procedure comprises at least one subsequent transmission after the RA procedure

2615 Transmitting the PDCCH, based on a second PDCCH-related configuration, for the at least one subsequent transmission to the UE in RRC_INACTIVE state if (or when) the network node provides the second PDCCH-related configuration to the UE

END

FIG. 26

START

2700

2705

Initiating a SDT procedure on a Cell in RRC_INACTIVE state, wherein the SDT procedure comprises a RA procedure for SDT and subsequent transmission(s) after the RA procedure for SDT, and the Cell is controlled by a network node

2710

Monitoring PDCCH based on a first PDCCH-related configuration during the RA procedure for SDT

2725

Monitoring PDCCH based on a second PDCCH-related configuration during the subsequent transmission(s)

END

FIG. 27

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- NR, NR and NG-RAN overall description, Stage 2. *TS 38.300 V16.2.0*
- NR, Medium Access Control (MAC) protocol specification. *TS 38.321 V16.1.0*
- NR, Radio Resource Control (RRC) protocol specification. *TS 38.331 V16.1.0*
- **ZTE CORPORATION.** Work Item on NR small data transmissions in INACTIVE state. *RP-193252*
- NR, Physical layer procedures for control. *TS 38.213 V16.2.0*
- UE triggered transition from RRC_INACTIVE to RRC_CONNECTED (UE context retrieval success). *3GPP TS 38.300 V16.2.0*
- UE triggered transition from RRC_INACTIVE to RRC_CONNECTED (UE context retrieval failure). *3GPP TS 38.300 V16.2.0*
- Reject from the network, UE attempts to resume a connection. *3GPP TS 38.300 V16.2.0*
- Network triggered transition from RRC_INACTIVE to RRC_CONNECTED. *3GPP TS 38.300 V16.2.0*